# EUROPEAN PATENT APPLICATION

(11) **EP 3 089 313 A1**
(43) Date of publication of application: **02.11.2016**
(21) Application number: 14874131.7
(22) Date of filing: 24.12.2014
(51) Int. Cl.: H02J 7/04, H02J 7/00, H02J 50/00

(54) **CIRCUIT DEVICE, PORTABLE DEVICE, AND CHARGING SYSTEM AND THE LIKE**

(30) Priority: 27.12.2013 JP 2013272285
(71) Applicant: Nitto Denko Corporation, Ibaraki-shi, Osaka 567-8680 (JP)
(72) Inventor: HATANAKA, Takezo, Ibaraki-shi Osaka 567-8680 (JP); TSUDA, Hisashi, Ibaraki-shi Osaka 567-8680 (JP)
(74) Representative: Müller-Boré & Partner Patentanwälte PartG mbB
(86) International application number: PCT/JP2014/084036
(87) International publication number: WO 2015/098908

(57) **Abstract**

A circuit device includes : a transformation unit 124 configured to output charged power of any battery 3 of various types of batteries 3 at a driving voltage of a driving component 5; a charging unit 112 capable of charging the battery 3 in a suitable charging manner by an input of outside power supplied from outside; an identifying unit 125 configured to identify the type of the battery 3; and a charging and discharging control unit 127 configured to control the charging unit 112 so as to switch the charging manner depending on the type of the battery 3.

## Description

### Technical Field

The present invention relates to a circuit device, a portable device, and a charging system and the like, each having a function of charging a battery in a charging manner in accordance with the type of the battery.

### Background Art

There have been known various types of circuit devices each configured to charge a battery. For example, in Patent Literature 1, proposed is a charging and discharging control circuit including: a control means for controlling charging and discharging of a secondary battery; and a communication means for communicating with a device driven by the secondary battery, the charging and discharging control circuit being configured so that when a signal indicating a long-term stop is received from the device driven by the secondary battery, an input from a charger is stopped, and discharging is controlled to decrease the value of SOC below a predetermined value.

### Citation List

### Patent Literature

Patent Literature 1: Japanese Unexamined Patent Publication No. 2013-239279

### Summary of Invention:

### Technical Problem

The above-described known charging and discharging control circuit is, however, on the assumption that chargeable batteries are of the same type, and does not have a function of charging any battery of different types of batteries. Even among batteries of the same size or of the same shape, their charging specifications may be different because of the variation in material or in structure. In addition, there are primary batteries which cannot be charged. Thus, in the known charging and discharging control circuit, there is a limitation on the chargeable batteries. For this reason, it is desirable that various types of batteries are chargeable because this offers a wide choice of options of batteries usable as a power source of a driving component.

An object of the present invention is therefore to provide a circuit device, portable device, and a charging system and the like, each capable of charging a battery in a charging manner in accordance with the type of the battery.

### Solution to Problem

To solve the above-described problem, according to a first aspect of the present invention, a circuit device includes: a transformation unit configured to output charged power of any battery of various types of batteries at a driving voltage of a driving component; a charging unit capable of charging the battery in a suitable charging manner by an input of outside power supplied from outside; an identifying unit configured to identify the type of the battery; and a charging control unit configured to control the charging unit so as to switch the charging manner depending on the type of the battery.

With the above structure, it is possible to switch the charging manner depending on the type of the battery. This enables any of the various types of batteries to be used as a power source of the driving component even when the charging specifications of the batteries are different from one another.

The charging control unit of the first aspect may be arranged to control the charging unit so as to select a charging manner in which charging is not performed when the type of the battery is a primary battery, and so as to select another charging manner in which charging is performed when the type of the battery is a secondary battery.

The above structure allows the primary battery and the secondary battery to be used as a power source of the driving component.

The identifying unit of the first aspect may be arranged to identify the type of the battery based on a discharge voltage.

With the above structure, the type of the battery is identified based on the discharge voltage input to the transformation unit, and this makes the identification easier and leads to downsizing of the circuit device.

The circuit device of the first aspect may further include: a detection unit configured to detect the input of the outside power to the charging unit; and a switching controller configured to switch a state of the transformation unit from an operation state to a stopped state only when the input of the outside power to the charging unit is detected by the detection unit.

With the above-structure, a function of stopping the charging and the operation is realized without requiring a manual on-off mechanism or an automatic on-off mechanism using a mechanical contact. That is to say, prohibition of the operation of the driving component during the charging and allowance of the operation of the driving component upon the end of the charging are automatically switched in accordance with whether there is power supply from the outside. Thus, with the circuit device having the above arrangement, such a manual or automatic on-off mechanisms using a mechanical contact is not needed. This leads to downsizing of a device on which the circuit device is mounted and facilitates production of the device.

The circuit device of the first aspect may be formed as an integrated circuit device.

With the above structure, the circuit device including the charging unit, the transformation unit, and the like is in the form of a one chip as an integrated circuit device, leading to further downsizing of a device on which the circuit device is mounted.

According to a second aspect of the invention, a circuit device includes: a transformation unit configured to output charged power of any battery of various types of batteries at a driving voltage of a driving component; a charging unit configured to charge the battery by an input of outside power supplied from outside; an identifying unit configured to identify the type of the battery; and a charging and discharging control unit configured to control the transformation unit and the charging unit so as to switch a charging-discharging manner depending on the type of the battery.

With the above structure, it is possible to switch the charging-discharging manner depending on the type of the battery. This enables any of the various types of batteries to be used as a power source of the driving component even when the charging specifications and/or the discharging specifications of the batteries are different from one another.

The charging and discharging control unit of the second aspect may be arranged to control the charging unit so as to select a charging-discharging manner in which charging is not performed when the type of the battery is a primary battery, and so as to select another charging-discharging manner in which charging is performed when the type of the battery is a secondary battery.

The above structure allows the primary battery and the secondary battery to be used as a power source of the driving component.

The identifying unit of the second aspect may be arranged to identify the type of the battery based on a discharge voltage.

With the above structure, the type of the battery is identified based on the discharge voltage input to the transformation unit, and this makes the identification easier and leads to downsizing of the circuit device.

The circuit device of the second aspect may further include: a detection unit configured to detect the input of the outside power to the charging unit; and a switching controller configured to switch a state of the transformation unit from an operation state to a stopped state only when the input of the outside power to the charging unit is detected by the detection unit.

With the above-structure, a function of stopping the charging and the operation is realized without requiring a manual on-off mechanism or an automatic on-off mechanism using a mechanical contact. That is to say, prohibition of the operation of the driving component during the charging and allowance of the operation of the driving component upon the end of the charging are automatically switched in accordance with whether there is power supply from the outside. Thus, with the circuit device having the above arrangement, such a manual or automatic on-off mechanisms using a mechanical contact is not needed. This leads to downsizing of a device on which the circuit device is mounted and facilitates production of the device.

The circuit device of the second aspect may be formed as an integrated circuit device.

With the above structure, the circuit device including the charging unit, the transformation unit, and the like is in the form of a one chip as an integrated circuit device, leading to further downsizing of a device on which the circuit device is mounted.

According to a third aspect, a power source module includes: the circuit device of the first or second aspect; and a power-receiving module configured to receive power from the outside in a contactless manner and to output the received power to the charging unit as the outside power.

The above structure improves easiness in handling of the battery when the battery is charged, because power is supplied in the contactless manner.

The power source module of the third aspect may be arranged to further include: a power-receiving module configured to receive power from the outside by a resonance phenomenon and to output the received power to the charging unit as the outside power; and the circuit device of the first or second aspect, and arranged so that the circuit device being provided in a magnetic field space which is formed by the resonance phenomenon to have a lower magnetic field strength than other parts.

With the above structure, in addition to the contactless power supply, the freedom of design in charging the battery is improved because employed is the power supply by the resonance phenomenon with which the distance of power supply is increased as compared to the electromagnetic induction. Furthermore, because the power-receiving module to which power is supplied by the resonance phenomenon is provided, a space portion having a weak magnetic field is generated at or around the power-receiving module, and this space portion is effectively used as a position for arranging the circuit device. Thus, downsizing of the device is achieved, and in addition, arrangement of the circuit device and the like is completed merely by conducting the operation of incorporating the power source module into the device.

According to a fourth aspect, a portable device includes: the circuit device of the first or second aspect; a power-receiving module configured to output power to the charging unit as the outside power; and the battery provided in an attachable/detachable manner.

With the above structure, provided is the downsized portable device with good portability.

The portable device of the fourth aspect includes: the power source module of the third aspect; and the battery provided in an attachable/detachable manner.

With the above structure, provided is the downsized portable device which has good portability and a property of easier handling.

According to a fifth aspect of the invention, a charging system includes: the portable device of the fourth aspect; and a charging device including a power-supplying module configured to supply power to the power-receiving module.

According to a sixth aspect of the invention, a human wearable device includes the circuit device of the first or second aspect.

According to a seventh aspect of the invention, a hearing aid includes the circuit device of the first or second aspect.

According to another aspect of the invention, a circuit device includes: a transformation unit configured to output charged power of any battery of various types of batteries at a driving voltage of a driving component; a charging unit capable of charging the battery in a suitable charging manner by an input of outside power supplied from outside; an identifying unit configured to identify a charging specification of the battery; and a charging control unit configured to control the charging unit so as to switch the charging manner depending on the charging specification of the battery identified by the identifying unit.

With the above structure, it is possible to charge the battery in the charging manner corresponding to the charging specification of the battery. This enables any of the various types of batteries to be used as a power source of the driving component.

### Advantageous Effects of Invention

In the present invention, it is possible to charge a battery in a charging manner in accordance with the type of the battery. Brief Description of Drawings

[FIG. 1] FIG. 1 is a block diagram illustrating a charging system and a circuit device.
[FIG. 2] FIG. 2 is a block diagram illustrating the charging system and the circuit device.
[FIG. 3] FIG. 3 is a block diagram of a power control circuit.
[FIG. 4] FIG. 4 is a block diagram of the power control circuit.
[FIG. 5] FIG. 5 is a detailed block diagram of a power source control circuit.
[FIG. 6] FIG. 6 is a block diagram of an air battery/LIB replaceable circuit.
[FIG. 7] FIG. 7 is an explanatory diagram illustrating an operating state of the air battery/LIB replaceable circuit.
[FIG. 8A] FIG. 8A is an explanatory diagram illustrating an operating state of the air battery/LIB replaceable circuit.
[FIG. 8B] FIG. 8B is an explanatory diagram illustrating an operating state of the air battery/LIB replaceable circuit.
[FIG. 9] FIG. 9 is a block diagram of a LIB/nickel hydrogen battery replaceable circuit.
[FIG. 10A] FIG. 10A is an explanatory diagram illustrating an operating state of the LIB/nickel hydrogen battery replaceable circuit.
[FIG. 10B] FIG. 10B is an explanatory diagram illustrating an operating state of the LIB/nickel hydrogen battery replaceable circuit.
[FIG. 11A] FIG. 11A is an explanatory diagram illustrating an operating state of the LIB/nickel hydrogen battery replaceable circuit.
[FIG. 11B] FIG. 11B is an explanatory diagram illustrating an operating state of the LIB/nickel hydrogen battery replaceable circuit.
[FIG. 12] FIG. 12 is a block diagram of a silver-zinc battery/LIB replaceable circuit.
[FIG. 13A] FIG. 13A is an explanatory diagram illustrating an operating state of the silver-zinc battery/LIB replaceable circuit.
[FIG. 13B] FIG. 13B is an explanatory diagram illustrating an operating state of the silver-zinc battery/LIB replaceable circuit.
[FIG. 14A] FIG. 14A is an explanatory diagram illustrating an operating state of the silver-zinc battery/LIB replaceable circuit.
[FIG. 14B] FIG. 14B is an explanatory diagram illustrating an operating state of the silver-zinc battery/LIB replaceable circuit.
[FIG. 15A] FIG. 15A is an explanatory diagram illustrating an operating state of the silver-zinc battery/LIB replaceable circuit.
[FIG. 15B] FIG. 15B is an explanatory diagram illustrating an operating state of the silver-zinc battery/LIB replaceable circuit.
[FIG. 16] FIG. 16 is a block diagram of the charging system.
[FIG. 17] FIG. 17 is an explanatory diagram illustrating a schematic structure of an ear-hanging hearing aid.
[FIG. 18A] FIG. 18A is a plan view of a power source module.
[FIG. 18B] FIG. 18B is a front view of the power source module.
[FIG. 19] FIG. 19 is an explanatory diagram illustrating a schematic structure of a charging device.
[FIG. 20] FIG. 20 is a block diagram of plural-type batteries replaceable circuit.
[FIG. 21] FIG. 21 illustrates a charging and discharging data table.
[FIG. 22] FIG. 22 illustrates a flowchart of a charging and discharging control routine.

### Description of Embodiments

### (Structure of Circuit Device 1: charging manner switching function)

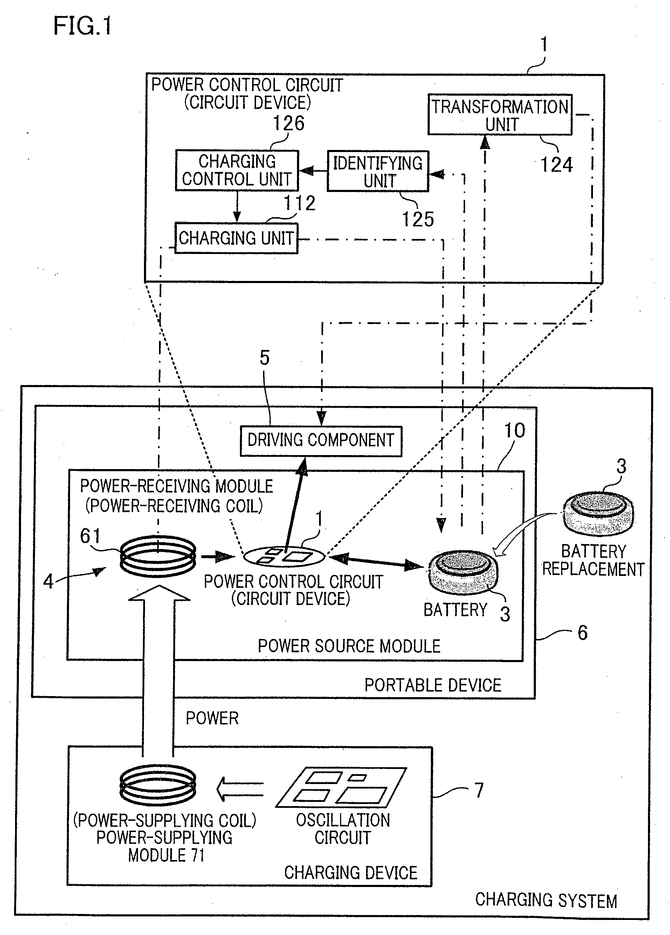

As shown in FIG. 1, a circuit device 1 of this embodiment is structured by a power control circuit having a function of charging a battery 3 in a charging manner in accordance with the type of the battery 3. The power control circuit includes: a transformation unit 124 configured to output charged power of any battery 3 of various types of batteries 3 at a driving voltage of a driving component 5; a charging unit 112 capable of charging the battery 3 in a suitable charging manner by an input of outside power supplied from outside; an identifying unit 125 configured to identify the type of the battery 3; and a charging control unit 126 configured to control the charging unit 112 so as to switch the charging manner depending on the type of the battery 3. Thus, the circuit device 1 is capable of switching the charging manner depending on the type of the battery 3. This enables any of the various types of batteries 3 to be used as a power source of the driving component 5 even when the charging specifications of the batteries 3 are different from one another. This enables a wide range of selections from the batteries 3 of the same size and of the same shape.

The identifying unit 125 may identify a charging specification of the battery 3. Further, the charging control unit 126 may be configured to control the charging unit 112 so as to switch the charging manner depending on the charging specification of the battery 3 identified by the identifying unit 125. That is, the power control circuit may be configured to include: the transformation unit 124 configured to output charged power of any battery 3 of various types of batteries 3 at a driving voltage of the driving component 5; the charging unit 112 capable of charging the battery 3 in a suitable charging manner by an input of outside power supplied from outside; the identifying unit 125 configured to identify the charging specification of the battery 3; and the charging control unit 126 configured to control the charging unit 112 so as to switch the charging manner depending on the charging specification of the battery 3 identified by the identifying unit 125. With this structure, it is possible to charge any of the various types of batteries 3 in the charging manner corresponding to its charging specification. This enables any of the various types of batteries 3 to be used as a power source of the driving component 5.

Note that the "charging manner" includes the state where charging is not performed. To be more specific, when the battery 3 is a secondary battery, selected is a charging manner in which charging is performed under a condition of voltage, current, and/or charge cycle suitable for the type or charging specification of the battery 3. Meanwhile, when the battery 3 is a primary battery, selected is a charging manner in which charging is not performed.

The batteries 3 include primary batteries and secondary batteries. Examples of the primary batteries include air batteries. As the secondary batteries, any of batteries which are chargeable and dischargeable are usable. Examples of the battery 3 include a lead storage battery, a valve-regulated lead storage battery, a lithium air battery, a lithium ion battery, a lithium ion polymer battery, a lithium iron phosphate ion battery, a lithium-sulfur battery, a lithium titanate battery, a nickel-cadmium storage battery, a nickel-hydrogen rechargeable battery, a nickel-iron battery, a nickel-lithium battery, a nickel-zinc battery, a rechargeable alkali battery, a sodium-sulfur battery, a redox flow battery, a zinc-bromine flow battery, a silicon battery, and a silver-zinc battery.

The nominal voltage of the air battery, which is the primary battery, falls within the range of 1.2 V to 1.4 V. The nominal voltage is a value indicating a standard voltage between terminals when a battery is used in a normal state. A terminal voltage higher than the nominal voltage is obtained when the battery is almost fully charged, but the terminal voltage is lower than the nominal voltage when discharging has been advanced or a large current is supplied to a load.

The nominal voltage of a nickel hydrogen secondary battery also falls within the range of 1.2 V to 1.4 V as same as that of the air battery. Examples of the secondary battery 3 having a nominal voltage higher than the nominal voltage of the air battery include lead storage battery, a valve-regulated lead storage battery, a lithium air battery, a lithium ion battery, a lithium polymer battery, a manganese dioxide-lithium secondary battery, and a titanium carbon lithium secondary battery.

The nominal voltages of the lithium ion battery and the lithium polymer battery fall within the range of 3.6 V to 3.7 V. The nominal voltage of the manganese dioxide-lithium secondary battery is 3.0 V. The nominal voltage of the titanium carbon lithium secondary battery is 1.5 V. The voltage range between a discharging stop voltage and a charging stop voltage of the lithium ion battery is 2.7 V to 4.2 V. The discharging stop voltage indicates the minimum discharge voltage with which the discharging is safely done, whereas the charging stop voltage indicates the maximum charging voltage with which the charging is safely done.

The secondary battery 3 is preferably a lithium ion battery. In this case, the nominal voltage of the lithium ion battery falls within the range of 3.6 V to 3.7 V and is higher than the nominal voltages of the air battery and the nickel hydrogen secondary battery, which are in the range of 1.2 V to 1.4 V. Furthermore, the lithium ion battery has such a discharge characteristic that the battery voltage decreases from around 4.2 V to around 2.7 V along with the discharging. Because the energy density of this battery is higher than those of the air battery and the nickel hydrogen secondary battery, a device can be driven for a longer time than in a case where the air battery or the nickel hydrogen secondary battery is used.

The transformation unit 124 is a transformation circuit which functions as a transformation unit performing signal processing of converting charged power of the battery 3 to driving power of the driving component 5 and outputting the converted power. As the transformation unit 124, a linear regulator may be employed for voltage dropping, and a switching regulator may be employed for voltage boosting and voltage dropping. Each of these regulators may be embodied by rapidly turning on and off a current by a semiconductor device.

The charging unit 112 is an IC (charging circuit) for a constant current/constant voltage linear charger, and has functions such as a function of reporting that the charging current has been reduced to a predetermined setting value, a function of ending the charging using a timer, a function of stabilizing the charging current by means of thermal feedback, and a function of limiting the chip temperature in a high-power mode or in high ambient temperatures. The charging unit 112 may include a plurality of charging circuits so that charging is performed at optimum efficiency in each of predetermined categories into which the charging specifications of the batteries 3 are divided. This enables charging at high efficiency.

The identifying unit 125 has a function of identifying the type of the battery 3 based on the discharge voltage of the battery 3. Thus, the type of the battery 3 is identified based on the discharge voltage of the battery 3 input to the transformation unit 124, and thereby the identification is easier and downsizing of the circuit device 1 is achieved.

The identifying unit 125 may include one or more of the following functions in addition to and in combination with the above function of identifying the type based on the discharge voltage: a function of identifying the type based on the charging behavior at the time of supplying power for identification to the battery 3; a function of identifying the type by detecting a difference in light reflected by the surface of the battery 3 or by reading a mark thereon using an optical sensor; a function of identifying the type of the battery 3 manually input through a not-illustrated input button or the like; and a function of identifying the type based on the internal resistance generated when alternating current passes through the battery 3. In this case, by combining the above identifying functions depending on a device on which the circuit is mounted or depending on the usage environment, the accuracy in identifying the type of the battery 3 by the identifying unit 125 is improved.

The charging control unit 126 has a function of controlling the charging unit 112 so as to select a charging manner in which charging is not performed when the type of the battery 3 is the primary battery, and so as to select another charging manner in which charging is performed when the type of the battery 3 is the secondary battery. Thus, in the circuit device 1, the above control function of the charging control unit 126 enables different types of batteries 3 (the primary battery and the secondary battery) to be used in a replaceable manner. Further, the charging control unit 126 has a function of controlling the charging unit 112 to select a charging manner in which charging is performed under a condition of voltage and current suitable for the type of the battery 3 when it is the secondary battery. Thus, in the circuit device 1, the battery 3 is efficiently charged even when the battery 3, which is the secondary battery, is replaced with another battery 3 of a different type (with a different charging specification).

### (Structure of Circuit Device 1: charging-discharging manner switching function)

The above description deals with a case where the circuit device 1 has the charging manner switching function of controlling the charging unit 112. However, the disclosure is not limited to this. In addition to the charging manner switching function, the circuit device 1 may include a discharging manner switching function of controlling the transformation unit 124. In other words, the circuit device 1 may include a charging-discharging manner switching function of controlling the charging unit 112 and the transformation unit 124.

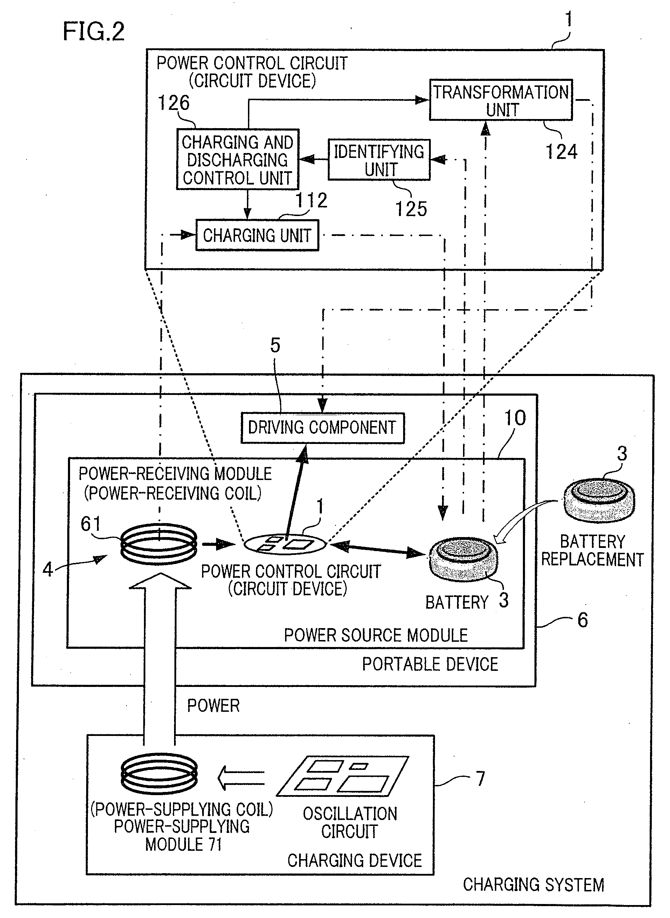

To be more specific, as shown in FIG. 2, the circuit device 1 includes: the transformation unit 124 configured to output charged power of any battery 3 of various types of batteries 3 at a driving voltage of the driving component 5; the charging unit 112 configured to charge the battery 3 by an input of outside power supplied from outside; an identifying unit 125 configured to identify the type of the battery 3; and a charging and discharging control unit 127 configured to control the transformation unit 124 and the charging unit 112 so as to switch the charging-discharging manner depending on the type of the battery 3. That is, the circuit device 1 includes the charging and discharging control unit 127 in place of the charging control unit 126 of FIG. 1. With the above structure, it is possible to switch the charging-discharging manner depending on the type of the battery 3. This enables any of the various types of batteries 3 to be used as a power source of the driving component 5 even when the charging specifications and/or the discharging specifications of the batteries 3 are different from one another.

### (Structure of Circuit Device 1: operation stopping function of transformation unit 124 during charging)

Each of the above-described circuit device 1 of FIG. 1, which has the charging manner switching function, and the circuit device 1 of FIG. 2, which has the charging-discharging manner switching function, preferably includes an operation stopping function of stopping the operation of the transformation unit 124 during charging.

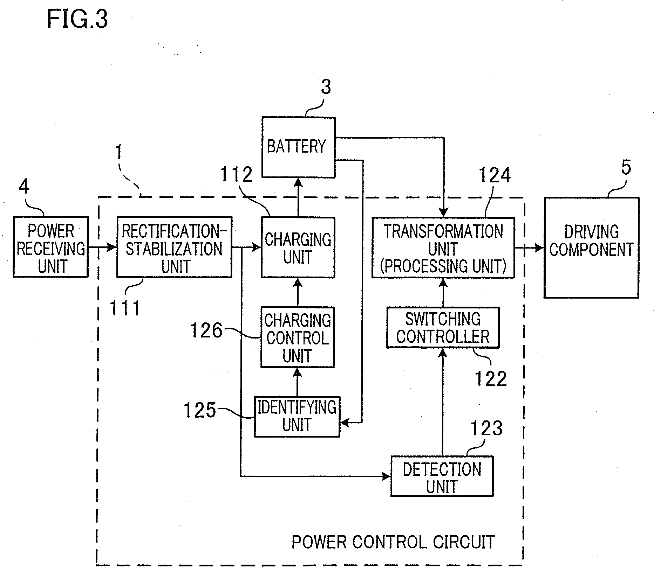

In this regard, a description will be given for the circuit device having the charging manner switching function, as an example. As shown in FIG. 3, this circuit device 1 preferably includes: a detection unit 123 configured to detect input of the outside power to the charging unit; and a switching controller 122 configured to switch the state of the transformation unit 124 from an operation state to a stopped state only when the input of the outside power to the charging unit 112 is detected by the detection unit 123.

To be more specific, the circuit device 1 includes: a rectification-stabilization unit 111 configured to output DC power by rectifying AC power supplied from the outside via a power receiving unit 4 from which the AC power is output; the charging unit 112; the transformation unit 124; the detection unit 123 configured to detect the input of the power to the charging unit 112; and the switching controller 122 configured to switch the state of the transformation unit 124 from the operation state to the stopped state only when the detection unit 123 detects the input of the power to the charging unit 112. The circuit device 1 is connectable to the driving component 5 which is driven by the charged power in the battery 3.

In the circuit device 1 having the above arrangement, the operation stopping function during charging is included without requiring a manual on-off mechanism or an automatic on-off mechanism using a mechanical contact. That is to say, the prohibition of the operation of the driving component 5 during the charging and the allowance of the operation of the driving component 5 upon the end of the charging are automatically switched in accordance with whether there is power supply from the outside. Thus, with the circuit device 1 having the above arrangement, such a manual or automatic on-off mechanisms using a mechanical contact is not needed. This leads to downsizing of a device on which the circuit device 1 is mounted and facilitates production of the device.

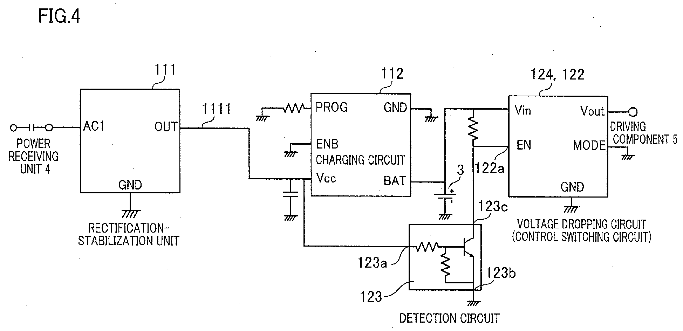

The power receiving unit 4 employs either wired power supply or wireless power supply. Examples of the wireless power supply include electromagnetic induction and electromagnetic field resonance. To specifically describe the rectification-stabilization unit 111, as shown in FIG. 4, a rectification-stabilization IC may be used as this unit 111. The rectification-stabilization IC is an IC in which functions such as full bridge synchronous rectification, voltage conditioning and wireless power control, and protection from a voltage, current, or temperature anomaly are integrated into one chip. When the power output from the power receiving unit 4 is DC power, the rectification-stabilization unit 111 is omitted.

The detection unit 123 is a detection circuit configured to output a detection signal which indicates that DC power is output from the rectification-stabilization unit 111 to the charging unit 112. The detection unit 123 may be formed by an analog circuit such as a transistor. To be more specific, the detection unit 123 connects a base terminal 123a of an NPN transistor to an output power line 1111 between the rectification-stabilization unit 111 and the charging unit 112, and connects an emitter terminal 123b to the ground. Furthermore, the detection unit 123 connects a collector terminal 123c to the positive side of the battery 3 via a resistor, and thereby, a high impedance state is achieved, and connection to the collector terminal 123c to an input terminal 122a of the switching controller 122 is achieved.

As a result, when the rectification-stabilization unit 111 does not output DC power, the base terminal 123a of the detection unit 123 is in the low level, and the emitter terminal 123b and the collector terminal 123c are not electrically connected with each other, with the result that a high-level detection signal is input to the input terminal 122a of the switching controller 122. In the meantime, when DC power is supplied from the rectification-stabilization unit 111 to the charging unit 112 via the output power line 1111, the base terminal 123a is into the high level, and hence the collector terminal 123c and the emitter terminal 123b are electrically connected with each other and the signal at the collector terminal 123c is changed to a low-level detection signal at a ground potential. As a result, when DC power is output from the rectification-stabilization unit 111 to the charging unit 112, the low-level detection signal is input to the input terminal 122a of the switching controller 122. The detection unit 123 may be formed by a digital circuit.

The switching controller 122 is a switching control circuit which sets the transformation unit 124 to the stopped state when the low-level detection signal is input from the detection unit 123, and sets the transformation unit 124 to the operation state when the high-level detection signal is input (i.e. , when the low-level detection signal is not input). While in this embodiment, the low-level detection signal is used as a condition of stopping the transformation unit 124 and the high-level detection signal is used as a condition of operating the transformation unit 124, the disclosure is not limited to this arrangement. The low-level detection signal may be used as a condition of activating the transformation unit 124 and the high-level detection signal may be used as a condition of stopping the transformation unit 124.

The driving component 5 is driven by the charged power of the battery 3 when the transformation unit 124 is in the operation state. Examples of the driving component 5 include all kinds of devices driven by electric power, such as a motor, a speaker, a light emitting member, a display member, and a microcomputer.

As such, the circuit device 1 is formed as an integrated circuit substrate by which the prohibition of the operation of the driving component 5 during the charging of the battery 3 and the allowance of the operation of the driving component 5 upon the end of the charging are automatically switched in accordance with whether there is power supply from the outside to the battery 3, and hence the circuit device 1 is formed in high density with a simple circuit configuration. The circuit device 1 may be employed in transportation machines such as cars (including EV), motorbikes, and airplanes, or may be employed in a later-described portable device.

Further, it is preferable that the circuit device 1 is formed as an integrated circuit device. In this case, the circuit device 1 including the charging unit 112, the transformation unit 124, and the like is in the form of a one chip as an integrated circuit device, leading to further downsizing of the device on which the circuit device 1 is mounted.

### (Specific Example of Circuit Device 1)

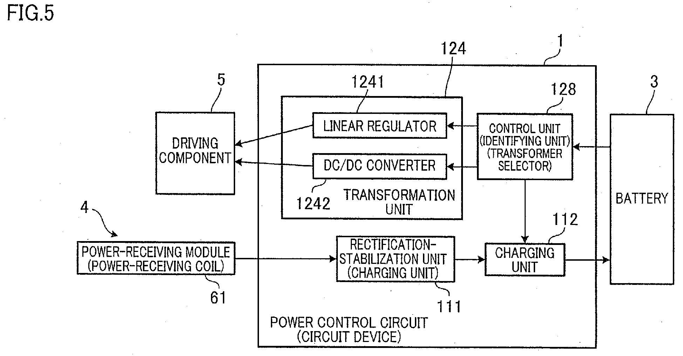

The following describes a specific example of the circuit configuration of the above-structured circuit device 1. As shown in FIG. 5, the circuit device 1 includes a control unit 128, the charging unit 112, the rectification-stabilization unit 111, and the transformation unit 124. To the rectification-stabilization unit 111, a power-receiving module 61 of the power receiving unit 4 is connected. The transformation unit 124 includes a linear regulator (LDO) 1241 and a DC/DC converter 1242. The control unit 128 has the function as the identifying unit 125 of FIG. 1, and has a function as a transformer selector of selecting either one of the linear regulator (LDO) 1241 and the DC/DC converter 1242 in the transformation unit 124. The function as the transformer selector is to select either one of the linear regulator 1241 and the DC/DC converter 1242 so that the discharge voltage of the battery 3 is converted to the driving voltage of the driving component 5 with high efficiency.

### (Specific Example of Circuit Device 1: air battery/LIB)

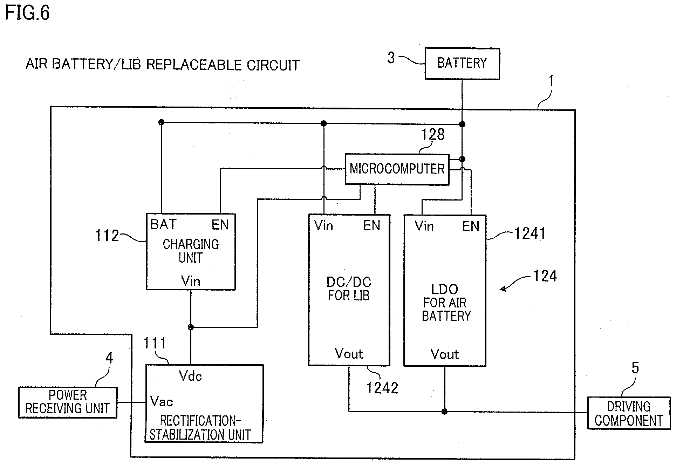

When the driving voltage of the driving component 5 falls within the range from 1.2 V to 1.4 V and the batteries 3 are a lithium ion battery (LIB) and an air battery, the circuit configuration shown in FIG. 6 is usable. In the circuit configuration of FIG. 6, there is included the rectification-stabilization unit 111 which includes an AC/DC converter configured to convert AC power from the power-receiving module 61 to the DC power and to output the DC power to the charging unit 112. The control unit 128 is configured to detect the discharge voltage of the battery 3. Further, the control unit 128 has the function of identifying the type of the battery 3 based on the discharge voltage of the battery 3, which function is identical to that of the identifying unit 125 of FIG. 3. Further, the control unit 128 selects a member suitable for the identified type of the battery 3 among the members of the transformation unit 124 (the linear regulator 1241 and the DC/DC converter 1242), and pulls an enable pin of the selected member of the transformation unit 124 high, thereby to activate the selected member. Meanwhile, the control unit 128 has a transformation unit's operation stopping function of shutting down (into the stopped state) the not-selected member of the transformation unit 124 by pulling the enable pin of the not-selected member of the transformation unit 124 low.

At the same time, the control unit 128 selects a member suitable for the identified type of the battery 3 from members of the charging unit 112 and pulls the enable pin of the selected member of the charging unit 112 high, thereby to activate the selected member of the transformation unit 124. Meanwhile, the control unit 128 has a charging unit's operation stopping function of shutting down (into the stopped state) the not-selected member of the charging unit 112 by pulling the enable pin of the not-selected member of the charging unit 112 low.

The control unit 128 is configured to detect the supply voltage between the rectification-stabilization unit 111 and the charging unit 112. The control unit 128 has a charging detecting function of detecting the charge state by detecting the supply voltage, which function is identical to that of the detection unit 123 of FIG. 3, and has a function of stopping the operation of the transformation unit 124 in an active state to prohibit discharging during charging when the charge state is detected. The control unit 128 is structured by a microcomputer, and the functions of the control unit 128 are performed by executing programs. Alternatively, the functions of the control unit 128 may be structured by hardware.

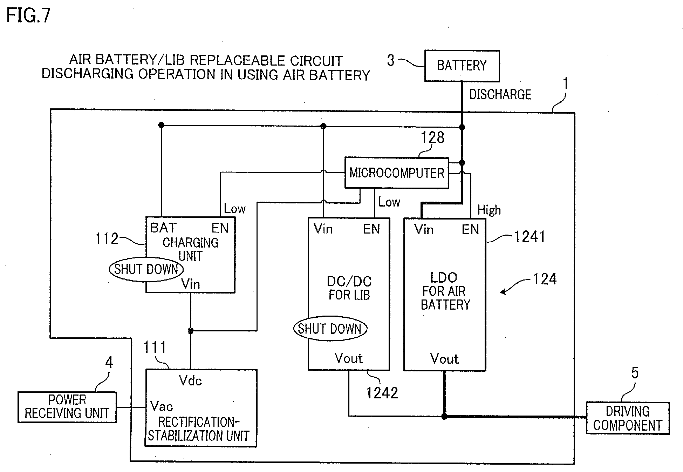

Description will be given for the case where the air battery is used in the above-described arrangement. As shown in FIG. 7, the control unit 128 identifies the type of the battery 3 as the air battery based on the discharge voltage of the battery 3. As a result, the control unit 128 executes a process of selecting the linear regulator 1241 but not selecting the DC/DC converter 1242 in the transformation unit 124, and a process of not selecting the charging unit 112.

To be more specific, the control unit 128 pulls the enable pin of the DC/DC converter 1242 low to shut down the DC/DC converter 1242, while the control unit 128 pulls the enable pin of the linear regulator 1241 high to activate the linear regulator 1241. Meanwhile, the control unit 128 pulls the enable pin of the charging unit 112 low to shut down the charging unit 112.

With this, the power at the discharge voltage of the battery 3 which is the air battery is output as the power at the driving voltage through the linear regulator 1241. On the other hand, when it is determined that the battery 3 is in the charge state as a result of detection of the supply voltage, the shut-down state of the linear regulator 112 is maintained because the battery 3 is the air battery, and thereby supply of the charged power from the charging unit 112 to the battery 3 is prohibited. In other words, a charging function is turned off when the battery 3 is the air battery.

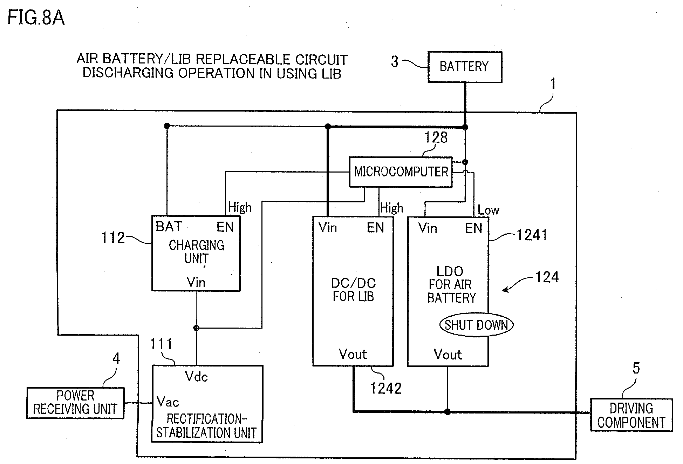

Now, description will be given for the case where the lithium ion battery is used. As shown in FIG. 8A, the control unit 128 identifies the type of the battery 3 as the lithium ion battery based on the discharge voltage of the battery 3. As a result, the control unit 128 executes a process of selecting the DC/DC converter 1242 but not selecting the linear regulator 1241 in the transformation unit 124, and a process of selecting the charging unit 112.

To be more specific, the control unit 128 pulls the enable pin of the linear regulator 1241 low to shut down the linear regulator 1241, while the control unit 128 pulls the enable pin of the DC/DC converter 1242 high to activate the DC/DC converter 1242. Meanwhile, the control unit 128 pulls the enable pin of the charging unit 112 high to activate the charging unit 112. With this, the power at the discharge voltage of the battery 3 which is the lithium ion battery is output as the power at the driving voltage through the DC/DC converter 1242.

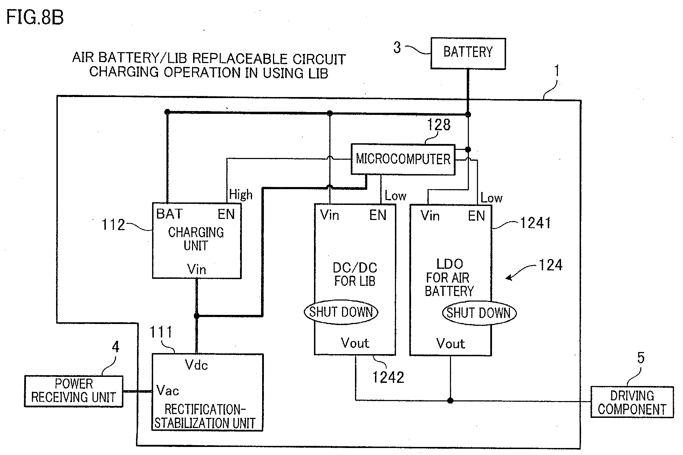

Meanwhile, when, as shown in FIG. 8B, it is determined that the battery is in the charge state as a result of detection of the supply voltage from the rectification-stabilization unit 111, the enable pin of the DC/DC converter 1242 is pulled low while the shut-down state of the linear regulator 1241 is maintained, so that the DC/DC converter 1242 is shut down. With this, charging to the battery 3 by the charging unit 112 is performed, while discharging is prohibited.

### (Specific Example of Circuit Device 1: LIB/nickel hydrogen battery)

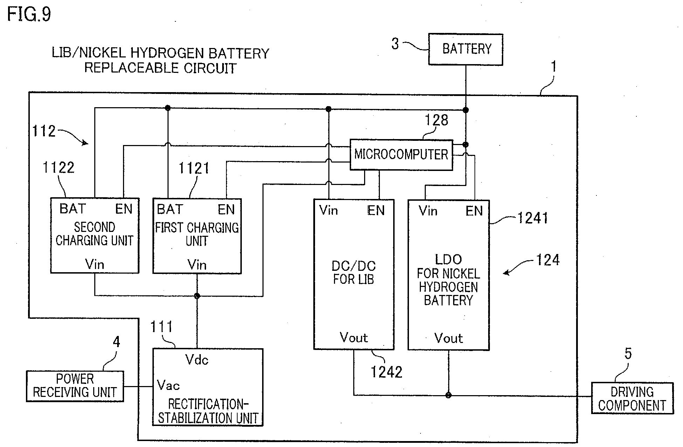

When the driving voltage of the driving component 5 falls within the range from 1.2 V to 1.4 V and the batteries 3 are a lithium ion battery (LIB) and a nickel hydrogen battery, a circuit configuration shown in FIG. 9 is usable. In the circuit configuration of FIG. 9, a first charging unit 1121 for the lithium ion battery and a second charging unit 1122 for the nickel hydrogen battery are included as the charging unit 112. In the transformation unit 124, the linear regulator 1241 is for the nickel hydrogen battery, while the DC/DC converter 1242 is for the lithium ion battery.

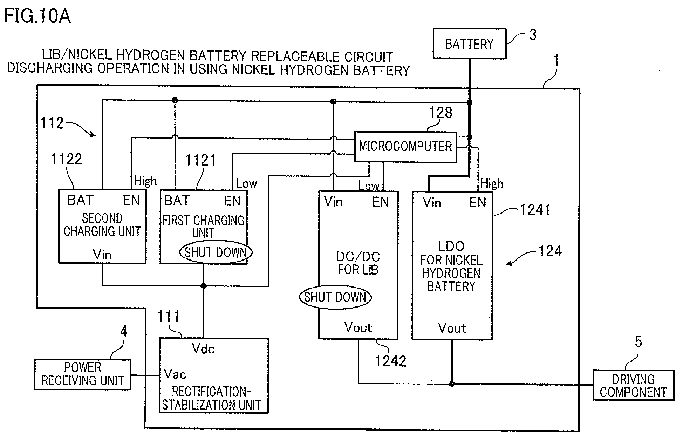

Description will be given for the case where the nickel hydrogen battery is used in the above-described arrangement. As shown in FIG. 10A, the control unit 128 identifies the type of the battery 3 as the nickel hydrogen battery based on the discharge voltage of the battery 3. As a result, the control unit 128 executes a process of selecting the linear regulator 1241 but not selecting the DC/DC converter 1242 in the transformation unit 124, and a process of selecting the second charging unit 1122 but not selecting the first charging unit 1121 in the charging unit 112.

To be more specific, the control unit 128 pulls the enable pin of the DC/DC converter 1242 low to shut down the DC/DC converter 1242, while the control unit 128 pulls the enable pin of the linear regulator 1241 high to activate the linear regulator 1241. Further, the control unit 128 pulls the enable pin of the first charging unit 1121 low to shut down the first charging unit 1121, while the control unit 128 pulls the enable pin of the second charging unit 1122 high to activate the second charging unit 1122. With this, the power at the discharge voltage of the battery 3 which is the nickel hydrogen battery is output as the power at the driving voltage through the linear regulator 1241.

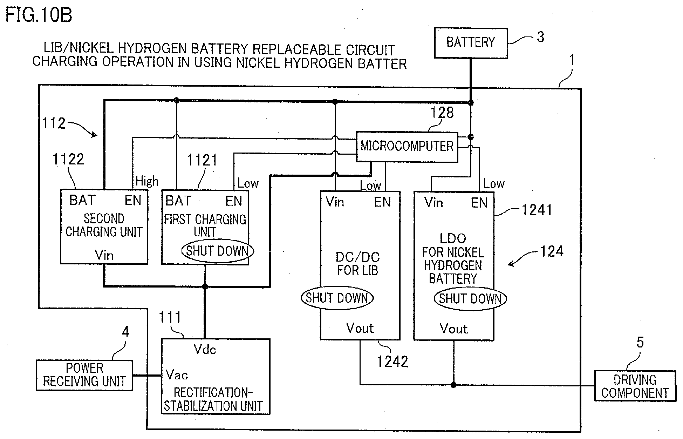

Meanwhile, when, as shown in FIG. 10B, it is determined that the battery is in the charge state as a result of detection of the supply voltage, the linear regulator 1241 is shut down while the shut-down state of the DC/DC converter 1242 is maintained. With this, when the battery 3 is the nickel hydrogen battery, charging to the battery 3 by the second charging unit 1122 is performed, while discharging is prohibited.

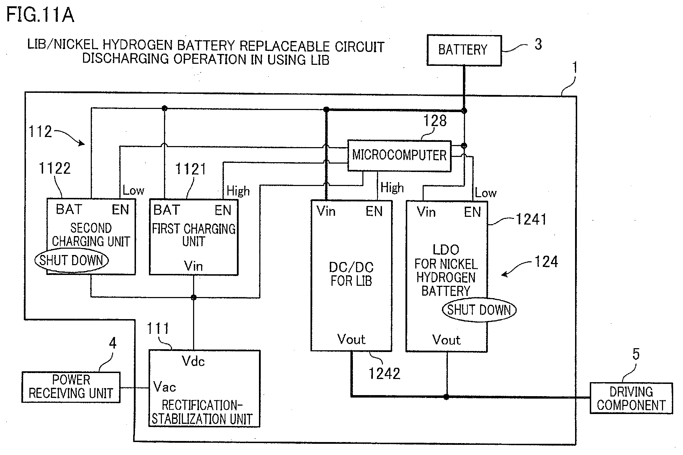

Now, description will be given for the case where the lithium ion battery is used. As shown in FIG. 11A, the control unit 128 identifies the type of the battery 3 as the lithium ion battery based on the discharge voltage of the battery 3. As a result, the control unit 128 executes a process of selecting the DC/DC converter 1242 but not selecting the linear regulator 1241 in the transformation unit 124, and a process of selecting the first charging unit 1121 but not selecting the second charging unit 1122 in the charging unit 112.

To be more specific, the control unit 128 pulls the enable pin of the linear regulator 1241 low to shut down the linear regulator 1241, while the control unit 128 pulls the enable pin of the DC/DC converter 1242 high to activate the DC/DC converter 1242. Further, the control unit 128 pulls the enable pin of the second charging unit 1122 low to shut down the second charging unit 1122, while the control unit 128 pulls the enable pin of the first charging unit 1121 high to activate the first charging unit 1121. With this, the power at the discharge voltage of the battery 3 which is the lithium ion battery is output as the power at the driving voltage through the DC/DC converter 1242.

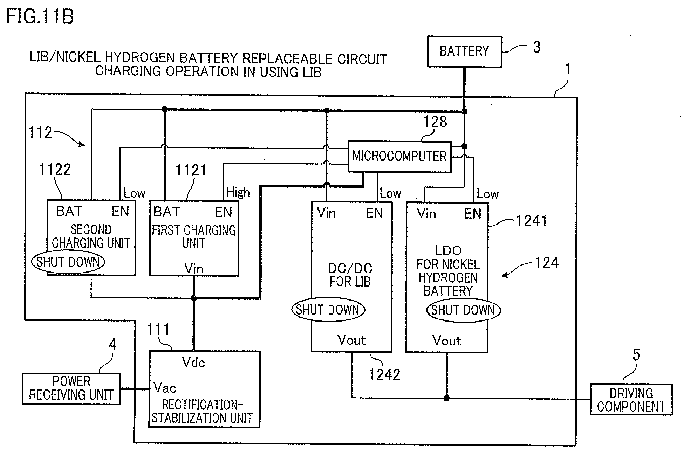

Meanwhile, when, as shown in FIG. 11B, it is determined that the battery is in the charge state as a result of detection of the supply voltage, the enable pin of the DC/DC converter 1242 is pulled low to shut down the DC/DC converter 1242 while the shut-down state of the linear regulator 1241 is maintained. With this, charging to the battery 3 by the first charging unit 1121 is performed, while discharging is prohibited.

### (Specific Example of Circuit Device 1: Silver-Zinc battery/LIB)

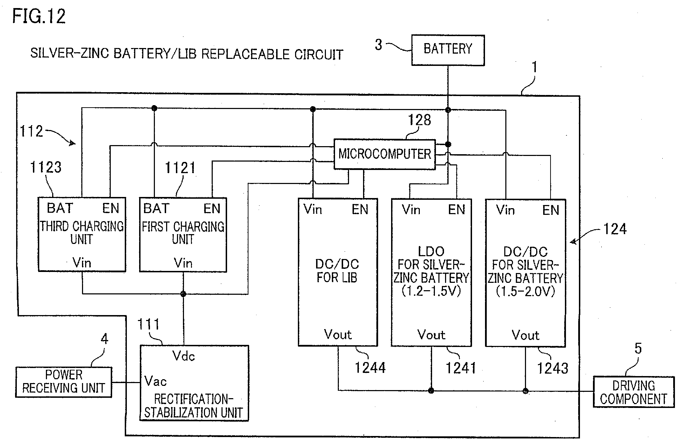

When the driving voltage of the driving component 5 falls within the range from 1.2 V to 1.4 V and the batteries 3 are a silver-zinc battery and a lithium ion battery (LIB), a circuit configuration shown in FIG. 12 is useable. The silver-zinc battery has a discharge characteristic that the discharge voltage changes in two stages: a discharge voltage stage from 1.5 V to 2.0 V; and a discharge voltage stage from 1.2 V to 1.5 V. The discharge voltage with the above discharge characteristic is detected by a voltage detection circuit such as an A/D converter included in the control unit 128. In the circuit configuration of FIG. 12, the first charging unit 1121 for the lithium ion battery and a third charging unit 1123 for the silver-zinc battery are included as the charging unit 112. In the transformation unit 124, the linear regulator 1241 is for the silver-zinc battery at the discharge voltage stage from 1.2 V to 1.5 V. The transformation unit 124 includes: a first DC/DC converter 1243 for the silver-zinc battery at the discharge voltage stage from 1.5 V to 2.0 V; and a second DC/DC converter 1244 for the lithium ion battery.

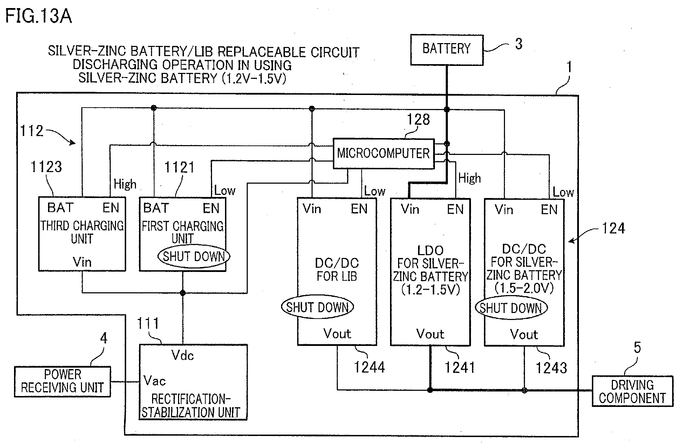

Description will be given for the case where, in the above-described arrangement, the A/D converter incorporated in the control unit 128 determines that the silver-zinc battery at the discharge voltage stage from 1.2 V to 1.5 V is used. As shown in FIG. 13A, the control unit 128 identifies the type of the battery 3 as the silver-zinc battery discharging at the discharge voltage stage from 1.2 V to 1.5 V based on the discharge voltage of the battery 3. As a result, the control unit 128 executes a process of selecting the linear regulator 1241 but not selecting the first DC/DC converter 1243 and the second DC/DC converter 1244 in the transformation unit 124, and a process of selecting the third charging unit 1123 but not selecting the first charging unit 1121 in the charging unit 112.

To be more specific, the control unit 128 pulls the enable pin of the linear regulator 1241 high to activate the linear regulator 1241. Meanwhile, the control unit 128 pulls the enable pins of the first DC/DC converter 1243 and the second DC/DC converter 1244 low, to shut down the converters 1243 and 1244.

Further, the control unit 128 pulls the enable pin of the first charging unit 1121 low, thereby to shut down the first charging unit 1121. Meanwhile, the control unit 128 pulls the enable pin of the third charging unit 1123 high to activate the third charging unit 1123. With this, the power at the discharge voltage within the range from 1.2 V to 1.5 V of the battery 3 which is the silver-zinc battery is output as the power at the driving voltage through the linear regulator 1241.

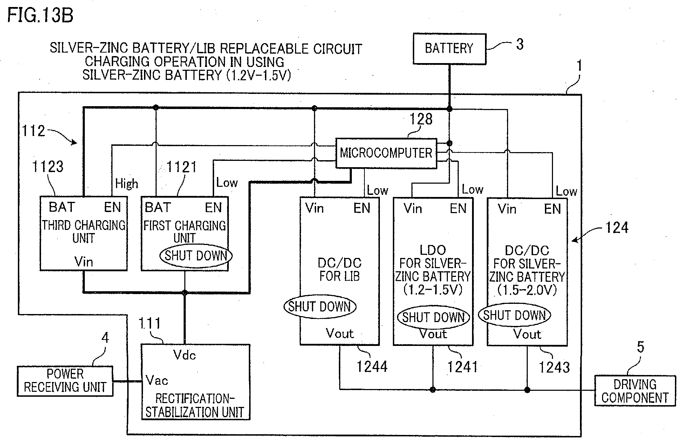

Meanwhile, when, as shown in FIG. 13B, it is determined that the battery is in the charge state as a result of detection of the supply voltage from the rectification-stabilization unit 111, the linear regulator 1241 is shut down while the shut-down states of the first DC/DC converter 1243 and the second DC/DC converter 1244 are maintained. That is, in this case, charging to the battery 3 by the third charging unit 1123 is performed, while discharging is prohibited.

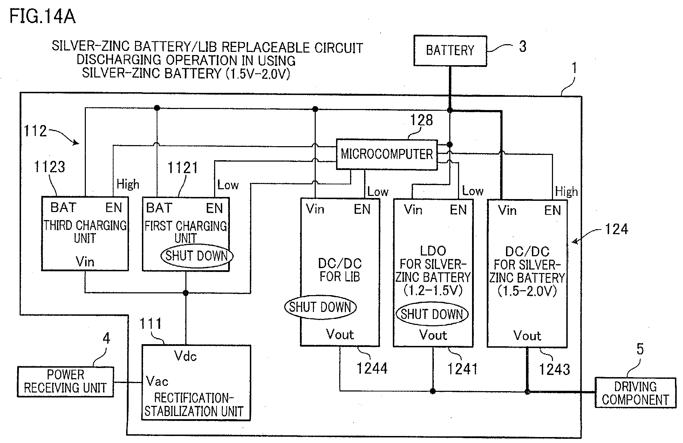

The following deals with a case where the silver-zinc battery is in a discharge state at the discharge voltage stage from 1.5 V to 2.0 V. As shown in FIG. 14A, the control unit 128 identifies the type of the battery 3 as the silver-zinc battery at the discharge voltage stage from 1.5 V to 2.0 V based on the discharge voltage of the battery 3. As a result, the control unit 128 executes a process of selecting the first DC/DC converter 1243 but not selecting the linear regulator 1241 and the second DC/DC converter 1244 in the transformation unit 124, and a process of selecting the third charging unit 1123 but not selecting the first charging unit 1121 in the charging unit 112.

To be more specific, the control unit 128 pulls the enable pin of the first DC/DC converter 1243 high to activate the first DC/DC converter 1243, while the control unit 128 pulls the enable pins of the linear regulator 1241 and the second DC/DC converter 1244 low to shut down the linear regulator 1241 and the second DC/DC converter 1244.

Further, the control unit 128 pulls the enable pin of the first charging unit 1121 low, thereby to shut down the first charging unit 1121. Meanwhile, the control unit 128 pulls the enable pin of the third charging unit 1123 high to activate the third charging unit 1123. With this, the power at the discharge voltage within the range from 1.5 V to 2.0 V of the battery 3 which is the silver-zinc battery is output as the power at the driving voltage through the first DC/DC converter 1243.

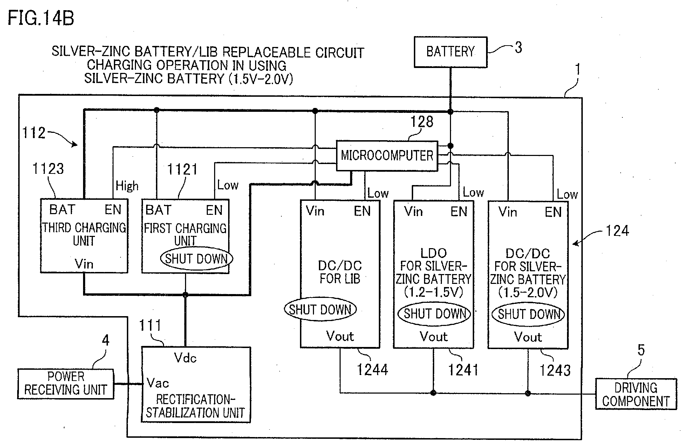

Meanwhile, when, as shown in FIG. 14B, it is determined that the battery is in the charge state as a result of detection of the supply voltage from the rectification-stabilization unit 111, the first DC/DC converter 1243 is shut down while the shut-down states of the second DC/DC converter 1244 and linear regulator 1241 are maintained. That is, in this case, charging to the battery 3 by the third charging unit 1123 is performed, while discharging is prohibited.

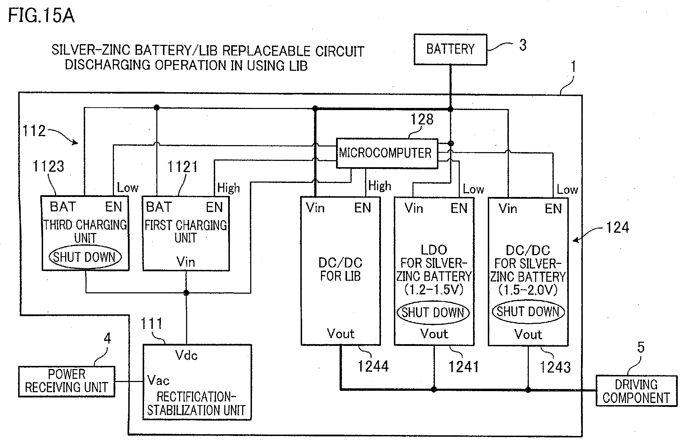

Now, description will be given for the case where the lithium ion battery is used. As shown in FIG. 15A, when it is determined that the battery 3 is in the discharge state, the control unit 128 identifies the type of the battery 3 as the lithium ion battery based on the discharge voltage of the battery 3. As a result, the control unit 128 executes a process of selecting the second DC/DC converter 1244 but not selecting the linear regulator 1241 and the first DC/DC converter 1243 in the transformation unit 124, and a process of selecting the first charging unit 1121 but not selecting the third charging unit 1123 in the charging unit 112.

To be more specific, the control unit 128 pulls the enable pins of the linear regulator 1241 and the first DC/DC converter 1243 low to shut down the linear regulator 1241 and the first DC/DC converter 1243. Meanwhile, the control unit 128 pulls the enable pin of the second DC/DC converter 1244 high to activate the second DC/DC converter 1244. Further, the control unit 128 pulls the enable pin of the first charging unit 1121 high to activate the first charging unit 1121, while the control unit 128 pulls the enable pin of the third charging unit 1123 low to shut down the third charging unit 1123. With this, the power at the discharge voltage of the battery 3 which is the lithium ion battery is output as the power at the driving voltage through the second DC/DC converter 1244.

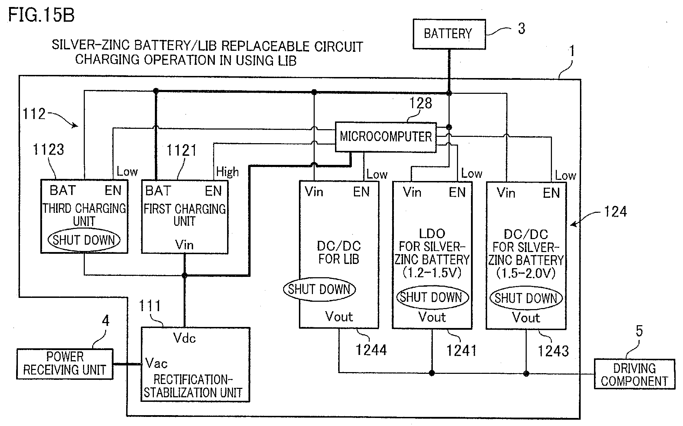

Meanwhile, when it is determined that the battery is in the charge state, as shown in FIG. 15B, the second DC/DC converter 1244 is shut down while the shut-down states of the linear regulator 1241 and the first DC/DC converter 1243 are maintained. That is, in this case, charging to the battery 3 by the first charging unit 1121 is performed, while discharging is prohibited.

### (Portable Device 6: application example of circuit device 1)

Now, the following will describe a case where the circuit device 1 arranged as above is employed in a portable device 6.

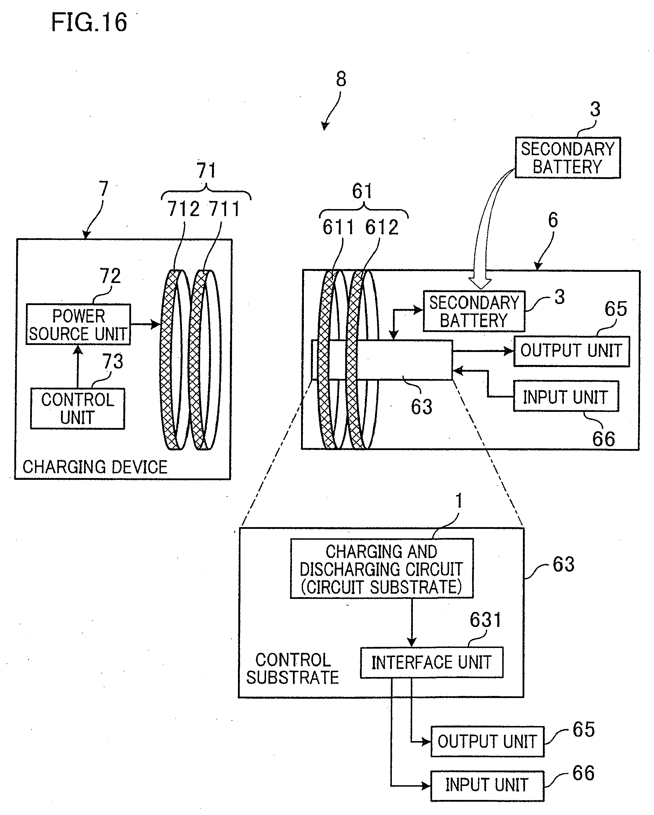

As shown in FIG. 16, the portable device 6 includes: the power-receiving module 61 (power receiving unit 4) to which power is supplied from the outside by a resonance phenomenon; the chargeable and dischargeable battery 3 ; a control substrate 63 in which the above-described circuit device 1 and an interface unit 631 are incorporated; an output unit 65 (the driving component 5) such as a speaker, a light emitting member, and a display member, and an input unit 66 (the driving component 5) such as a microphone and a switch. The resonance phenomenon indicates that two or more coils are resonated at a resonance frequency. The portable device 6 arranged in this manner is configured to be charged by a charging device 7.

The charging device 7 includes a power-supplying module 71 configured to supply power to the power-receiving module 61 of the portable device 6 by the resonance phenomenon. The portable device 6 and the charging device 7 constitute a charging system 8 which is configured to supply power (by wireless power transmission) from the power-supplying module 71 to the power-receiving module 61 by the resonance phenomenon.

The control substrate 63 includes the circuit device 1 and the interface unit 631 mounted thereon, and is connected to the output unit 65 and the input unit 66. The interface unit 631 has a function of outputting a control signal to the output unit 65, a function of receiving an input signal from the input unit 66, and a function of processing different kinds of information and data corresponding to the use of the driving component 5 of the portable device 6.

The control substrate 63 including the circuit device 1 and the interface unit 631 is provided in a magnetic field space which is formed by the resonance phenomenon to have a lower magnetic field strength than other parts. To put it differently, the portable device 6 generates a space portion having a weak magnetic field at or around the inner side of the power-receiving module 61 when power supply using the resonance phenomenon is carried out, and this space portion is used as an arrangement place of the control substrate 63. The portable device 6 can therefore be downsized because malfunction and generation of heat equal to or higher than a predetermined temperature are prevented as the generation of an eddy current by a magnetic field at the control substrate 63 provided in the space portion is restrained. Details of the space portion having a low magnetic field strength will be given later. In addition to the control substrate 63, the battery 3, the output unit 65, and the input unit 66 may also be provided in the space portion (magnetic field space).

The power-receiving module 61 includes a power-receiving resonance coil 611 and a power-drawing coil 612. Examples of the types of coils used as the power-receiving resonance coil 611 and the power-drawing coil 612 include a spiral type, a solenoid type, and a loop type.

The portable device 6 of this embodiment 1 includes both a handheld device (which can be carried by a hand) and a wearable device (which can be attached to a human body: a human wearable device). Specific examples of the portable device 6 include a portable computer (a laptop PC, a note PC, a tablet PC, or the like), a camera, an audio visual device (a portable music player, an IC recorder, a portable DVD player, or the like), a calculator (such as a pocket computer and an electronic calculator), a game console, a computer peripheral (a portable printer, a portable scanner, a portable modem, or the like), a dedicated information device (an electronic dictionary, an electronic notebook, an electronic book, a portable data terminal, or the like), a mobile communication terminal, a voice communication terminal (a mobile phone, a Personal Handyphone System, a satellite phone, a third party radio system, an amateur radio, a specified low power radio, a personal radio, a citizen radio, or the like), a data communication terminal (a mobile phone, a Personal Handyphone System (a feature phone and a smart phone), a pager, or the like), a broadcasting receiver (a television receiver and a radio), a portable radio, a portable television receiver, a One Seg receiver, another type of device (a wristwatch and a pocket watch), a hearing aid, a handheld GPS, a security buzzer, a flashlight/pen light, and a battery pack. Examples of the hearing aids include ear-hanging hearing aids, ear hole fitting hearing aids, and glasses-type hearing aids.

### (Charging Device 7)

The charging device 7 which is configured to charge the portable device 6 arranged as above includes a charging stand on which the portable device 6 is able to be mounted. The charging device 7 includes the power-supplying module 71 configured to supply power by the resonance phenomenon to the portable device 6 mounted on the charging stand. The power-supplying module 71 includes a power-supplying resonance coil 711 and a power-supplying coil 712. Examples of the types of coils used as the power-supplying resonance coil 711 and the power-supplying coil 712 include a spiral type, a solenoid type, and a loop type. The charging device 7 further includes a power source unit 72 configured to supply AC power to the power-supplying module 71 and a control unit 73 configured to control the power source unit 72.

As the portable device 6 is mounted on the charging stand of this charging device 7, the power-supplying module 71 of the charging device 7 and the power-receiving module 61 of the portable device 6 oppose each other. By simply mounting the portable device 6 on the charging stand of the charging device 7, the charging to the battery 3 starts and the power supply from the battery 3 of the portable device 6 to the driving components 5 such as the output unit 65 and the input unit 66 is turned off. In the meantime, by simply lifting up the portable device 6 from the charging stand of the charging device 7, the charging to the battery 3 is stopped and the power supply from the battery 3 of the portable device 6 to the driving components 5 such as the output unit 65 and the input unit 66 is turned on.

In a manner similar to the portable device 6 , the charging device 7 may be arranged such that a space portion having a weak magnetic field is generated at or around the inner side of the power-supplying module 71 at the time of power supply by the resonance phenomenon, and this space portion is used as a position for arranging the power source unit 72 and the control unit 73. This arrangement makes it possible to downsize the charging device 7 in addition to the portable device 6.

### (Space Portion Having Weak Magnetic Field)

The following details the space portion with a weak magnetic field, which essentially serves as a position in the portable device 6 for arranging the control substrate 63.

The portable device 6 is configured to form the space portion with a weak magnetic field at a desirable position. The formation of the space portion at the desired position is realized by setting power supply conditions such as a positional relation with the charging device 7, a power-supplying state, and an internal structure.

For example, the portable device 6 may be arranged such that, when power is supplied by the resonance phenomenon from the power-supplying resonance coil 711 of the power-supplying module 71 of the charging device 7 to the power-receiving resonance coil 611 of the power-receiving module 61, a magnetic field space having a magnetic field strength lower than the magnetic field strengths in parts other than the desired position is formed as the space portion, at a desired position between the power-supplying resonance coil 711 of the power-supplying module 71 and the power-receiving resonance coil 611 of the power-receiving module 61. In this case, the space portion is created in a position nearby the power-receiving module 61, closer to the charging device 7. Therefore, the leading end portion side of the outer wall member is ensured as the position for arranging the control substrate 63, by slightly shifting towards back side the position for arranging the power-receiving module 61 from the leading end portion of the outer wall member on the side of the charging device 7.

A method of forming the space portion will be detailed. When power is supplied from the power-supplying resonance coil 711 of the power-supplying module 71 of the charging device 7 to the power-receiving resonance coil 611 of the power-receiving module 61 of the portable device 6 by the resonance phenomenon, for example, the frequency of the power supplied to the power-supplying resonance coil 711 of the power-supplying module 71 is set in such a way that the direction of the current flowing in the power-supplying resonance coil 711 of the power-supplying module 71 is opposite to the direction of the current flowing in the power-receiving resonance coil 611 of the power-receiving module 61.

In the formation method above, when power transmission using the resonance phenomenon is performed, the coupling coefficient indicating the strength of the coupling between the power-supplying resonance coil 711 and the power-receiving resonance coil 611 is increased as the power-supplying resonance coil 711 of the power-supplying module 71 and the power-receiving resonance coil 611 of the power-receiving module 61 are disposed to be close to each other. When the coupling coefficient is high in this manner, the measurement of a transmission characteristic "S21" (which is a value used as an index of power transmission efficiency when power is supplied from the power-supplying resonance coil 711 to the power-receiving resonance coil 611) shows that a measured waveform has two separated peaks on the low frequency side and the high frequency side, respectively. As the frequency of the power supplied to the power-supplying resonance coil 711 is set at a frequency around the peak on the high frequency side, the direction of the current flowing in the power-supplying resonance coil 711 is arranged to be opposite to the direction of the current flowing in the power-receiving resonance coil 611, and hence the magnetic field generated on the inner circumference side of the power-supplying resonance coil 711 and the magnetic field generated on the inner circumference side of the power-receiving resonance coil 611 cancel each other out, with the result that an influence of the magnetic field is reduced on the inner circumference sides of the power-supplying resonance coil 711 and the power-receiving resonance coil 611. With this, a magnetic field space having a magnetic field strength lower than the magnetic field strengths in parts other than the inner circumference sides of the power-supplying resonance coil 711 and the power-receiving resonance coil 611 is formed as a space portion.

In another method of forming a space portion, for example, when power is supplied from the power-supplying resonance coil 711 to the power-receiving resonance coil 611 by the resonance phenomenon, the frequency of the power supplied to the power-supplying resonance coil 711 is set so that the direction of the current flowing in the power-supplying resonance coil 711 is identical with the direction of the current flowing in the power-receiving resonance coil 611.

According to the method above, when power transmission using the resonance phenomenon is performed, the coupling coefficient indicating the strength of the coupling between the power-supplying resonance coil 711 and the power-receiving resonance coil 611 is increased as the power-supplying resonance coil 711 and the power-receiving resonance coil 611 are disposed to be close to each other. When the coupling coefficient is high in this manner, the measurement of the transmission characteristic shows that a measured waveform has two separated peaks on the low frequency side and the high frequency side, respectively. As the frequency of the power supplied to the power-supplying resonance coil 711 is set at a frequency around the peak on the low frequency side, the direction of the current flowing in the power-supplying resonance coil 711 is arranged to be identical with the direction of the current flowing in the power-receiving resonance coil 611, and hence the magnetic field generated on the outer circumference side of the power-supplying resonance coil 711 and the magnetic field generated on the outer circumference side of the power-receiving resonance coil 611 cancel each other out, with the result that an influence of the magnetic field is reduced on the outer circumference sides of the power-supplying resonance coil 711 and the power-receiving resonance coil 611. With this, a magnetic field space having a magnetic field strength lower than the magnetic field strengths in parts other than the outer circumference sides of the power-supplying resonance coil 711 and the power-receiving resonance coil 611 is formed as a space portion.

In addition to the above, the size of the space portion may be set based on the strength of the magnetic coupling between the power-supplying resonance coil 711 and the power-receiving resonance coil 611, by changing adjustment parameters regarding the power-supplying resonance coil 711 and the power-receiving resonance coil 611. For example, the size of the magnetic field space is increased by relatively weakening the magnetic coupling between the power-supplying resonance coil 711 and the power-receiving resonance coil 611. In the meantime, the size of the magnetic field space is decreased by relatively strengthening the magnetic coupling between the power-supplying resonance coil 711 and the power-receiving resonance coil 611. As such, a space portion optimum for the size of the portable device 6 is formed.

Alternatively, the size of the magnetic field space may be changed in such a way that the arrangement relation of the power-supplying resonance coil 711 and the arrangement relation of the power-receiving resonance coil 611 are used as the adjustment parameters, and the adjustment parameters are changed to change the strength of the magnetic coupling between the power-supplying resonance coil 711 and the power-receiving resonance coil 611.

Furthermore, the shape of the space portion space may be arranged to be a desired shape in such a way that the shapes of the power-supplying resonance coil 711 and the power-receiving resonance coil 611 are used as the adjustment parameters, and the shapes of these coils are changed into desirable shapes to change the strength of the magnetic coupling between and around the power-supplying resonance coil 711 and the power-receiving resonance coil 611. In this case, as the power-supplying resonance coil 711 and the power-receiving resonance coil 611 are arranged to have the desired shapes, a magnetic field space having a relatively low magnetic field strength is formed with a desired shape corresponding to the shapes of the coils.

In addition to the above, the size of the space portion may be set in such a way that at least one of the first distance between the power-supplying resonance coil 711 and the power-supplying coil 712 and the second distance between the power-drawing coil 612 and the power-receiving resonance coil 611 is used as an adjustment parameter, and the size is set based on this adjustment parameter. For example, the size of the magnetic field space is increased in such a way that the first distance between the power-supplying resonance coil 711 and the power-supplying coil 712 and the second distance between the power-drawing coil 612 and the power-receiving resonance coil 611 are relatively shortened so that the magnetic coupling is relatively weakened. In the meantime, the size of the magnetic field space is decreased in such a way that the first distance between the power-supplying resonance coil 711 and the power-supplying coil 712 and the second distance between the power-drawing coil 612 and the power-receiving resonance coil 611 are relatively elongated so that the magnetic coupling is relatively strengthened.

In addition to the above, as a space portion, a magnetic field space may be formed at a desired position with a magnetic field strength lower than the magnetic field strengths in parts other than the desired position, in such a manner that, a magnetic member is provided to cover at least a part of the power-receiving resonance coil 611 and the power-supplying resonance coil 711 except the surfaces where these coils oppose each other, and power transmission is carried out by changing the magnetic field between the power-supplying resonance coil 711 and the power-receiving resonance coil 611. The magnetic member may be provided to cover the inner circumferential surface of the power-receiving resonance coil 611. In this case, by blocking the magnetic field generated on the inner circumference side of the power-receiving resonance coil 611, a magnetic field space having a relatively low magnetic field strength is formed as a space portion on the inner circumference side of the power-receiving resonance coil 611.

In addition to the above, the magnetic member may be provided to cover any of the surfaces of the power-supplying resonance coil 711 and the power-receiving resonance coil 611, which surfaces are opposite to the surfaces where the coils oppose each other. In this case, by blocking the magnetic field generated at around the surface of the power-receiving resonance coil 611 opposite to the opposing surface thereof, a magnetic field space having a relatively low magnetic field strength is formed as a space portion at around the surface opposite to the opposing surface of the power-receiving resonance coil 611.

As such, the portable device 6 is arranged such that, based on a combination of at least one of the above-described methods of forming the space portion, a magnetic field space having a low magnetic field strength can be intentionally formed as a space portion at a desired position at or around the inner side of the power-receiving module 61, and the size and shape of the space portion can be freely set. To put it differently, in the portable device 6, a desired space portion is formed by adjusting the way of disposing the power-receiving module 61.

### (Hearing Aid)

Now, the following will detail a case where the portable device 6 arranged as above is employed in a hearing aid which constitute a human wearable device. While this embodiment 1 deals with an ear-hanging hearing aid 9 as an example of the hearing aid, the disclosure is not limited to this. Examples of the hearing aid include pocket-type (box-shaped) hearing aids, ear-hanging hearing aids (BTE), ear hole fitting hearing aids (ITE), canal-type hearing aids (ITC), CIC-type hearing aids (CIC), open-ear hearing aids, RIC-type hearing aids (RIC), bone-conduction hearing aids, and embedded hearing aids. Examples of the human wearable device include a device mounted on ears such as the hearing aids and a music player, a face-mounted device such as eyewear (e.g., glasses) with a portable computer, a wrist-mounted device such as a wristwatch, and medical equipment embedded in a human body.

### (Hearing Aid: ear-hanging hearing aid 9)

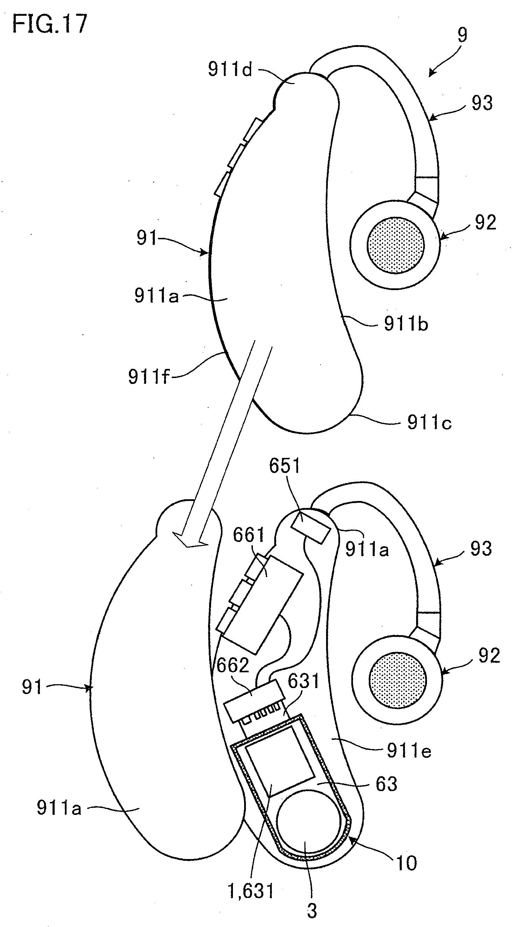

As shown in FIG. 17, the ear-hanging hearing aid 9 includes a hearing aid main body 91 configured to be attached to a pinna, an ear mold 92 configured to be abutted to an ear hole opening or its periphery, a joint part 93 joining the hearing aid main body 91 with the ear mold 92, the control substrate 63 including the circuit device 1 and the interface unit 631, and the output unit 65 and the input unit 66 which are connected to the control substrate 63. The output unit 65 is constituted by a member such as a speaker 651 configured to output sound. The input unit 66 is constituted by a member such as an operation button 661 for controlling sound volume and switching of the power source, and a sound concentrating microphone configured to convert outside sound into an electric sound signal.

The hearing aid main body 91 has a hexahedral housing (outer wall member) which is curved from the top part to the bottom part to extend along the root of the pinna. That is, the housing of the hearing aid main body 91 includes : a top surface portion 911d positioned in the top part; a bottom surface portion 911c positioned in the bottom part; a head-contacting surface portion 911a to contact the head; a pinna-contacting surface portion 911e opposing the head-contacting surface portion 911a', to contact the pinna; an inside contacting surface portion 911b which contacts the root of the pinna in a surface-to-surface manner; an outside surface portion 911f on the opposite side of the inside contacting surface portion 911b. The hearing aid main body 91 is structured to be dividable in two, i.e., into the head-contacting surface portion 911a and the pinna-contacting surface portion 911e. As such, the head-contacting surface portion 911a functions as a lid whereas the pinna-contacting surface portion 911e functions as a container.

To the top surface portion 911d of the hearing aid main body 91, one end portion of the joint part 93 is connected. The joint part 93 is a hollow tube in shape. The other end portion of the joint part 93 is connected to the ear mold 92. With this arrangement, the ear-hanging hearing aid 9 outputs sound collected and amplified by the hearing aid main body 91 from the speaker 651 to the ear mold 92 via the joint part 93, thereby making the sounds clearly audible to the user of the ear-hanging hearing aid 9.

### (Hearing Aid: ear-hanging hearing aid 9: power source module 10)

The ear-hanging hearing aid 9 arranged as above includes a power source module 10 which is detachably provided at a predetermined position. The power source module 10 has a power receiving function of receiving power by the resonance phenomenon, a secondary battery function of being chargeable and dischargeable, a charging and discharging function of performing charging and discharging to and from the secondary battery, and a control function of controlling the components of the ear-hanging hearing aid 9.

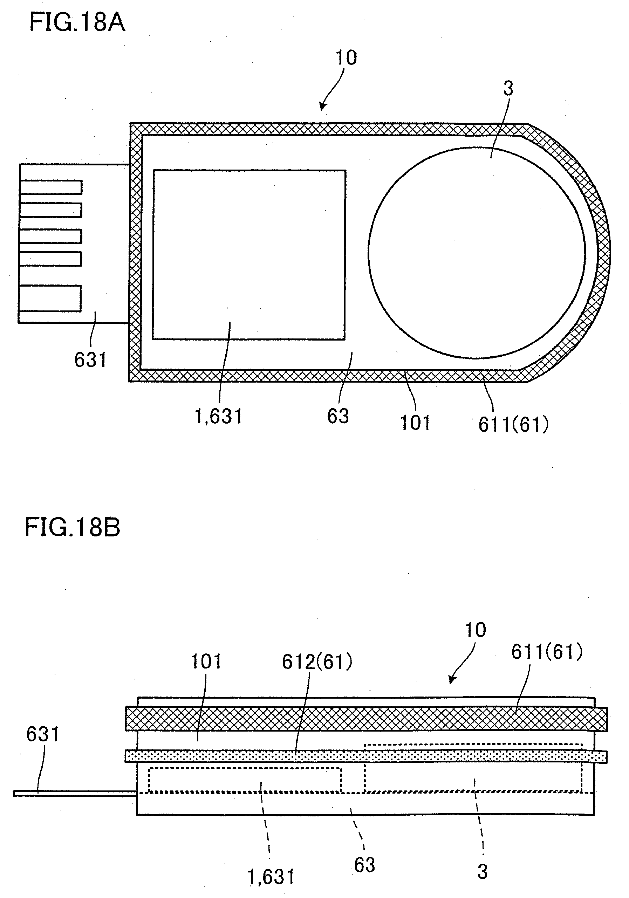

As shown in FIG. 18A and FIG. 18B, the power source module 10 includes the control substrate 63 which is a flat plate in shape, and the circuit device 1 and the battery 3 both provided on an upper surface of the control substrate 63. The circuit device 1 may be formed as a part of the control substrate 63. The circuit device 1 includes the above-described rectification-stabilization unit 111 and the like, and the interface unit 631. Around the control substrate 63, a wall member 101 is provided. The wall member 101 is made of an electrically-conductive material such as metal. On the outer circumferential surface of the wall member 101, the power-receiving resonance coil 611 and the power-drawing coil 612 are provided. The power-receiving resonance coil 611 and the power-drawing coil 612 are made of copper wire material coated with an insulation film.

As such, because the wall member 101 functioning as a magnetic member is provided to cover the inner circumferential surfaces of the power-receiving resonance coil 611 and the power-drawing coil 612, the circuit device 1 provided on the inner circumference sides of the power-receiving resonance coil 611 and the power-drawing coil 612 is arranged in a magnetic field space having a relatively low magnetic field strength. As a result, the circuit device 1 provided on the control substrate 63 is less influenced by the magnetic field when the power-receiving module 61 receives power.

In addition to the above, the inner circumference side of the wall member 101 is filled with solidified resin to cover the circuit device 1 and the control substrate 63. With this, in the power source module 10, the circuit device 1, the battery 3, or the like is less likely to be damaged by collision or water leakage.

From an end face of the control substrate 63 , a terminal portion 631 protrudes. The terminal portion 631 is connected to the interface unit 631, and includes various control signal terminals, a GND terminal, a power source terminal, and the like. The terminal portion 631 functions as a male connector, which a female connector 662 is attachable to and detachable from. The female connector 662 is connected with the output unit 65 of the speaker 651 or the like, and the input unit 661 of the operation button 661, the sound concentrating microphone, or the like.

The thus structured the power source module 10 makes it possible to produce or repair the ear-hanging hearing aid 9 easily and rapidly because such an operation can be done with the use of the detachability of the power source module 10. Furthermore, by standardizing the size, shape, and the terminal portion 631 of the power source module 10, the power source module 10 can be shared among various types of portable devices including hearing aids.

While in this embodiment 1, the wall member 101 functioning as a magnetic member covers the circumference of the control substrate 63, the lower surface of the power source module 10 (lower surface of the control substrate 63) may be further covered with a magnetic member, or the top surface of the power source module 10 may be further covered with a magnetic member. In such a case, each component on the control substrate 63 is arranged in a magnetic field space having a further lower magnetic field strength.

### (Charging Device 7 for Ear-Hanging Hearing Aid 9)

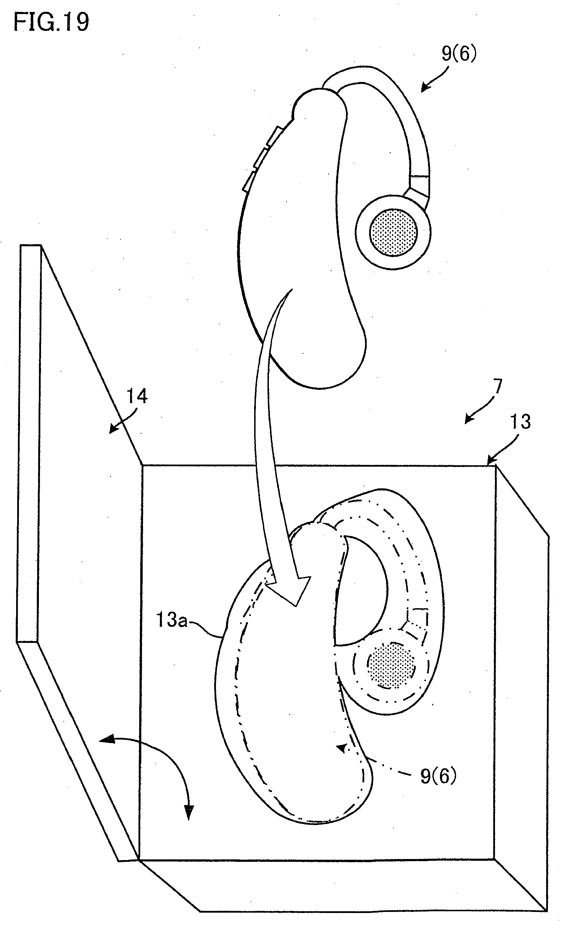

The ear-hanging hearing aid 9 is configured to be charged by the charging device 7 for the ear-hanging hearing aid 9. The charging device 7 includes, for example, as shown in FIG. 19, a supporting stand 13 which detachably supports the ear-hanging hearing aid 9 in a predetermined power supply posture. To be more specific, the supporting stand 13 includes a recessed portion 13a capable of accommodating therein the ear-hanging hearing aid 9. The recessed portion 13a is formed to position the ear-hanging hearing aid 9 in the horizontal direction and the height direction (vertical direction). The positioning in the height direction is made in such a way that, when the ear-hanging hearing aid 9 is mounted in the recessed portion 13a, a lower surface of the ear-hanging hearing aid 9 is brought into contact with the recessed portion 13a on account of gravity.

Thus, as the ear-hanging hearing aid 9 is positioned by the recessed portion 13a in the horizontal direction and the height direction when the ear-hanging hearing aid 9 is mounted in the recessed portion 13a of the supporting stand 13 , the distance and the positional relation between the power-receiving module 61 of the ear-hanging hearing aid 9 and the power-supplying module 71 of the charging device 7 are maintained to be constant, and this makes it possible to charge the battery 3 at a voltage suitable for the charging characteristic of the battery 3. It should be noted that the shape of the recessed portion 13a of the supporting stand 13 is merely an example for the case of the ear-hanging hearing aid 9 , and the shape is suitably changed in accordance with the type and size of the hearing aid.

The charging device 7 further includes a cover member 14 capable of covering an exposed part (upper surface side) of the ear-hanging hearing aid 9 supported by the supporting stand 13. The cover member 14 is provided so as to be an openable top surface of the supporting stand 13. The cover member 14 is provided with the power-supplying module 71 which supplies power by the resonance phenomenon to the power-receiving module 61 of the ear-hanging hearing aid 9 supported by the supporting stand 13. The power-supplying module 71 is arranged to oppose the power-receiving module 61 of the ear-hanging hearing aid 9 when the cover member 14 covers the exposed part of the ear-hanging hearing aid 9. Thus, because charging is performed only when the cover member 14 covers the ear-hanging hearing aid 9, whether the charging is being executed or stopped is determined by checking whether the ear-hanging hearing aid 9 is covered with the cover member 14. To put it differently, in the charging device 7, whether the charging is performed or not is determined in accordance with the opening/closing state of the cover member 14.

The power-supplying module 71 may be provided in the supporting stand 13. Furthermore, in a manner similar to the ear-hanging hearing aid 9, the charging device 7 may be arranged such that, a space portion having a weak magnetic field is generated at or around the inner side of the power-supplying module 71 at the time of the power supply by the resonance phenomenon, and this space portion is used as a position for arranging the control unit 73 or the like. This makes it possible to downsize the charging device 7 as well as the ear-hanging hearing aid 9.

When the ear-hanging hearing aid 9 is placed in the recessed portion 13a of the supporting stand 13 of the charging device 7, the power-supplying module 71 of the charging device 7 opposes the power-receiving module 61 of the ear-hanging hearing aid 9. When it is determined by the identifying unit 125 that the battery 3 is a secondary battery such as a lithium ion battery, the charging control unit 126 brings the charging unit 112 into the operation state. Thus, as shown in FIG. 3, charging to the battery 3 is started merely by placing the ear-hanging hearing aid 9 onto the supporting stand 13 of the charging device 7.

Furthermore, the power supply from the battery 3 of the ear-hanging hearing aid 9 to the output unit 65 such as the speaker 651 and to the input unit 661 (driving component 5) such as the operation button 661 and the sound concentrating microphone is turned off in such a way that the detection unit 123 detects DC power output from the rectification-stabilization unit 111 to the charging unit 112 during the charging and outputs a detection signal (low-level detection signal) indicating the detection to the switching controller 122, and the switching controller 122 having received the detection signal (low-level detection signal) changes the state of the transformation unit (processing unit) 124 to the stopped state. To put it differently, the start of the charging and turning off of a hearing aid function are performed simply by placing the ear-hanging hearing aid 9 on the charging device 7.

Meanwhile, when it is determined by the identifying unit 125 that the battery 3 is a primary battery such as an air battery, the charging control unit 126 brings the charging unit 112 into the stopped state. Thus, when the ear-hanging hearing aid 9 is placed onto the supporting stand 13 of the charging device 7, charging to the battery 3 which is the primary battery is not performed. As a result, regardless of the type of the mounted battery 3 (the primary battery or the secondary battery), the battery 3 is able to be set on the charging device 7, which makes it possible to increase the number of the types of the usable batteries 3.

When the battery 3 is the secondary battery, by lifting up the ear-hanging hearing aid 9 from the supporting stand 13 of the charging device 7, charging to the battery 3 is stopped. Furthermore, power supply from the battery 3 of the ear-hanging hearing aid 9 to the output unit 65 such as the speaker 651 and the input unit 661 (driving component 5) such as the operation button 661 and the sound concentrating microphone is turned on in such a way that the detection unit 123 detects that no DC power is output from the rectification-stabilization unit 111 to the charging unit 112 upon the end of the charging and sends, to the switching controller 122, a detection signal (high-level detection signal) indicating that no DC power is output, and the switching controller 122 having received the detection signal (high-level detection signal) changes the state of the transformation unit (processing unit) 124 to the operation state. To put it differently, stopping of the charging and turning on the hearing aid function are performed simply by detaching the ear-hanging hearing aid 9 from the charging device 7.

### (Modification)

The circuit device 1 including the control unit 128 structured by a microcomputer may be configured to make control referring to a charging and discharging table. In this case, by increasing or updating the data for the type of the battery 3 and the like in the charging and discharging table, it is possible to easily adapting the operation of the circuit device 1 for the increase in the number of types of the battery 3.

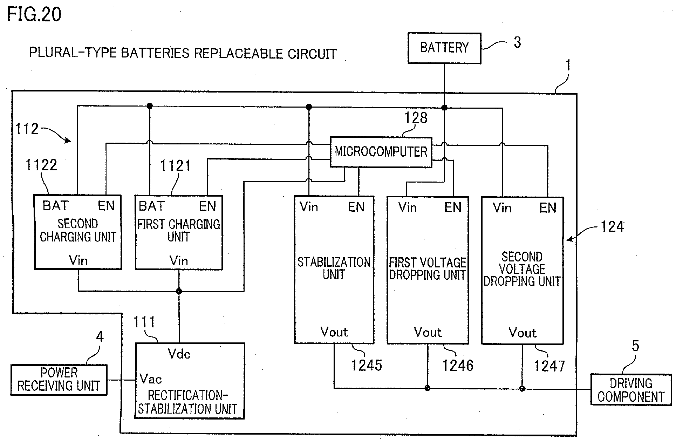

To be more specific, as shown in FIG. 20, the circuit device 1 includes the first charging unit 1121 and the second charging unit 1122 as the charging unit 112. The circuit device 1 further includes a stabilization unit 1245, a first voltage dropping unit 1246, and a second voltage dropping unit 1247. It should be noted that these units are listed merely as an example, and the charging unit 112 and the transformation unit 124 may be configured differently as long as: the charging unit 112 has a plurality of charging circuits in which outputting voltages are different from each other; and the transformation unit 124 has a plurality of transformation circuits in which degrees of transformation are different from each other.

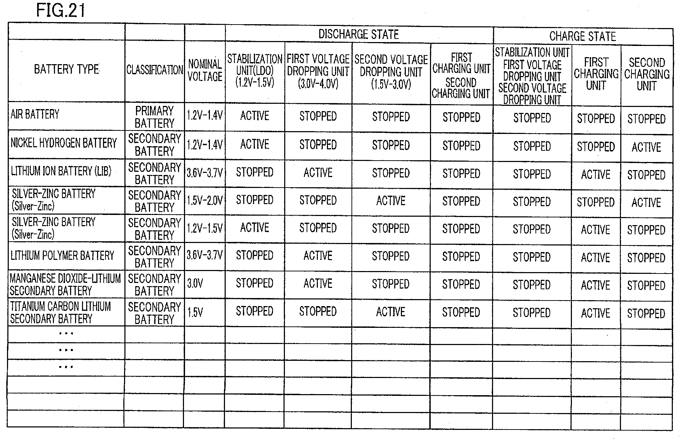

The control unit 128 stores therein various types of charging and discharging data in the charging and discharging table of FIG. 21. The charging and discharging data table includes the battery type and various types of data in association with the battery type. To be more specific, the charging and discharging data table stores therein: classification data indicating the primary battery or the secondary battery; nominal voltage data; discharge state data indicating the operation state or the stopped state of the stabilization unit or the like under the discharge state; and charge state data indicating the operation state or the stopped state of the stabilization unit or the like under the charge state. These types of data are associated with the battery types.

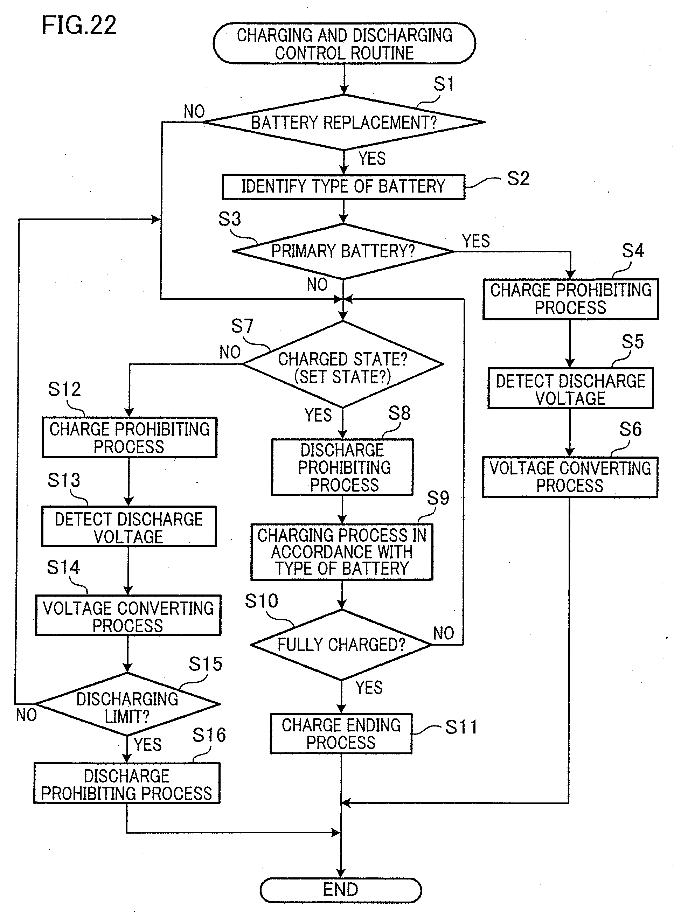

Further, as shown in FIG. 22, the control unit 128 stores therein a charging and discharging control routine for controlling the circuit device 1 using the charging and discharging data table, and executes the routine repeatedly at predetermined time intervals. Upon execution of the charging and discharging control routine, first, it is determined whether replacement of the battery 3 is performed (S1). When the replacement is performed (S1: YES), the type of the battery 3 is identified (S2). It is determined whether the identified type of the battery 3 is a primary battery such as an air battery (S3). When the battery 3 is the primary battery (S3: YES), executed is a charge prohibiting process (S4). That is, the charging and discharging data table of FIG. 21 is referred to. Then, the charge state data associated with the primary battery such as the air battery is obtained. When the battery is the air battery, for example, obtained is the charge state data to cause the stabilization unit 1245, the first voltage dropping unit 1246 , and the second voltage dropping unit 1247 into the stopped state, and the circuit device 1 of FIG. 20 is set to have a circuit for discharging from the air battery.

Thereafter, when a discharge voltage is detected (S5), a voltage converting process is performed referring to the charging and discharging table (S6) . That is, when the battery 3 is determined as the air battery, the state of the stabilization unit 1245 is set to the operation state, and thereby the power of the battery 3 is output to the driving component 5 via the stabilization unit 1245. Then, this routine ends.

Meanwhile, when replacement of the battery 3 is not performed (S1: NO), or when the battery 3 is not the primary battery (S3: NO), it is determined whether the portable device 6 is in the charge state due to the placement onto the charging device 7 (S7). When the portable device 6 is in the charge state (S7: YES), a discharge prohibiting process is executed referring to the corresponding charge state data "stopped" in the charging data table (S8) . Then, executed is a charging process in accordance with the type of the battery 3 (S9). That is, in FIG. 20, either one of the first charging unit 1121 and the second charging unit 1122 is brought into the operation state, and the other is brought into the shut-down state. After charging is started, it is determined whether the battery is fully charged (S10). When the battery is not fully charged (S10: NO), the routine goes back to S7. Meanwhile, when the battery is fully charged (S10: YES), a charge ending process of reporting that the battery is fully charged and/or stopping charging to prevent overcharge (S11). Then, this routine ends.

In the meantime, when the battery is not in the charge state (S7: NO), the charge prohibiting process is performed (S12). That is, in FIG. 20, the first charging unit 1121 and the second charging unit 1122 are brought into the shut-down state. Then, when the discharge voltage is detected (S13), the voltage converting process is performed referring to the charging and discharging table (S14). That is, when the battery 3 is determined as a lithium ion battery, the state of the first voltage dropping unit 1246 is set to the operation state, and thereby the power of the battery 3 is output to the driving component 5 via the first voltage dropping unit 1246. Note that, the value of the discharge voltage may be detected by the A/D converter of the control unit 128, and the states of the first voltage dropping unit 1246, the second voltage dropping unit 1247, and the stabilization unit 1245 may be switched in accordance with the detected value. In this case, an appropriate transformation process is possible for the battery 3 such as a silver-zinc battery in which the discharge voltage varies in plural stages.

Subsequently, it is determined whether the discharge voltage is at a discharging limit (S15). When the discharge voltage is not at the discharging limit (S15: NO), the routine goes back to S7. When the discharge voltage is at the discharging limit (S15: YES), all the members of the transformation unit 124 including the first voltage dropping unit 1246 are set to the stopped state, and thereby the discharge prohibiting process is performed (S16). Then, this routine ends.

The detailed description of the present invention provided hereinabove mainly focused on characteristics thereof for the purpose of easier understanding; however, the scope of the present invention shall be construed as broadly as possible, encompassing various forms of other possible embodiments, and therefore the present invention shall not be limited to the embodiments in the above description. Furthermore, the terms and phraseology used in the specification have been used to correctly illustrate the present invention, not to limit it. In addition, it will be understood by those skilled in the art that the other structures, systems, methods and the like included in the spirit of the present invention can be easily derived from the spirit of the invention described in the specification. Accordingly, it should be considered that the present invention covers equivalent structures thereof without departing from the spirit and scope of the invention as defined in the following claims. To fully understand the object and effects of the present invention, it is strongly encouraged to sufficiently refer to disclosures of documents already made available.

### Reference Signs List

- 1: POWER SOURCE CIRCUIT SUBSTRATE
- 3: BATTERY
- 4: POWER RECEIVING UNIT
- 5: DRIVING COMPONENT
- 6: PORTABLE DEVICE
- 7: CHARGING DEVICE
- 8: CHARGING SYSTEM
- 9: EAR-HANGING HEARING AID
- 10: POWER SOURCE MODULE
- 61: POWER-RECEIVING MODULE
- 71: POWER-SUPPLYING MODULE
- 73: CONTROL UNIT
- 74: DISPLAY UNIT
- 111: RECTIFICATION-STABILIZATION UNIT
- 112: CHARGING UNIT
- 124: TRANSFORMATION UNIT
- 125: IDENTIFYING UNIT
- 126: CHARGING CONTROL UNIT
- 127: CHARGING AND DISCHARGING CONTROL UNIT

## Claims

1. A circuit device comprising:
a transformation unit configured to output charged power of any battery of various types of batteries at a driving voltage of a driving component;
a charging unit capable of charging the battery in a suitable charging manner by an input of outside power supplied from outside;
an identifying unit configured to identify the type of the battery; and
a charging control unit configured to control the charging unit so as to switch the charging manner depending on the type of the battery.

2. The circuit device according to claim 1, wherein
the charging control unit controls the charging unit so as to select a charging manner in which charging is not performed when the type of the battery is a primary battery, and so as to select another charging manner in which charging is performed when the type of the battery is a secondary battery.

3. The circuit device according to claim 2, wherein
the identifying unit identifies the type of the battery based on a discharge voltage.

4. The circuit device according to claim 3, further comprising:
a detection unit configured to detect the input of the outside power to the charging unit; and
a switching controller configured to switch a state of the transformation unit from an operation state to a stopped state only when the input of the outside power to the charging unit is detected by the detection unit.

5. The circuit device according to claim 4, wherein
the circuit device is formed as an integrated circuit device.

6. A circuit device comprising:
a transformation unit configured to output charged power of any battery of various types of batteries at a driving voltage of a driving component;
a charging unit configured to charge the battery by an input of outside power supplied from outside;
an identifying unit configured to identify the type of the battery; and
a charging and discharging control unit configured to control the transformation unit and the charging unit so as to switch a charging-discharging manner depending on the type of the battery.

7. The circuit device according to claim 6, wherein
the charging and discharging control unit controls the charging unit so as to select a charging-discharging manner in which charging is not performed when the type of the battery is a primary battery, and so as to select another charging-discharging manner in which charging is performed when the type of the battery is a secondary battery.

8. The circuit device according to claim 7, wherein
the identifying unit identifies the type of the battery based on the discharge voltage.

9. The circuit device according to claim 8, further comprising:
a detection unit configured to detect the input of the outside power to the charging unit; and
a switching controller configured to switch a state of the transformation unit from an operation state to a stopped state only when the input of the outside power to the charging unit is detected by the detection unit.

10. The circuit device according to claim 9, wherein
the circuit device is formed as an integrated circuit device.

11. A power source module comprising: the circuit device recited in any one of claims 1 to 10; and a power-receiving module configured to receive power from the outside in a contactless manner and to output the received power to the charging unit as the outside power.

12. A power source module comprising:
a power-receiving module configured to receive power from the outside by a resonance phenomenon and to output the received power to the charging unit as the outside power; and
the circuit device recited in any one of claims 1 to 10, wherein the circuit device being provided in a magnetic field space which is formed by the resonance phenomenon to have a lower magnetic field strength than other parts.

13. A portable device comprising: the circuit device recited in any one of claims 1 to 10; a power-receiving module configured to output power to the charging unit as the outside power; and the battery provided in an attachable/detachable manner.

14. A portable device comprising: the power source module recited in claim 11 or 12; and the battery provided in an attachable/detachable manner.

15. A charging system comprising:
the portable device recited in claim 13 or 14; and
a charging device including a power-supplying module configured to supply power to the power-receiving module.

16. A human wearable device comprising the circuit device recited in any one of claims 1 to 10.

17. A hearing aid comprising the circuit device recited in any one of claims 1 to 10.

18. A circuit device comprising:
a transformation unit configured to output charged power of any battery of various types of batteries at a driving voltage of a driving component;
a charging unit capable of charging the battery in a suitable charging manner by an input of outside power supplied from outside;
an identifying unit configured to identify a charging specification of the battery; and
a charging control unit configured to control the charging unit so as to switch the charging manner depending on the charging specification of the battery identified by the identifying unit.
